# EUROPEAN PATENT APPLICATION

(11) **EP 4 794 266 A1**
(43) Date of publication of application: **19.08.2026**
(21) Application number: 24884612.3
(22) Date of filing: 25.10.2024
(51) Int. Cl.: H04L 9/40

(54) **MODEL AUTHORIZATION METHOD AND APPARATUS, AND READABLE STORAGE MEDIUM**

(30) Priority: 30.10.2023 CN 202311428355
(71) Applicant: HUAWEI TECHNOLOGIES CO., LTD., Shenzhen 518129 (CN)
(72) Inventor: GUO, Tao, Shenzhen, Guangdong 518129 (CN); WU, Yizhuang, Shenzhen, Guangdong 518129 (CN)
(74) Representative: Körber, Martin Hans
(86) International application number: PCT/CN2024/127476
(87) International publication number: WO 2025/092609

(57) **Abstract**

This application relates to the field of communication technologies, and in particular, to a model authorization method, an apparatus, and a readable storage medium. The method includes: An MTLF1 receives, from an AnLF, a first model retrieval request including an analytics ID. The MTLF1 sends, to an NRF, a token get request containing the analytics ID, an AnLF ID, and an MTLF2 ID. An MTLF2 is configured to provide a model corresponding to the analytics ID. After verifying that the AnLF has permission to obtain the model from the MTLF2, the NRF returns a first token to the MTLF1. The MTLF1 sends, to the MTLF2, a second model retrieval request including the analytics ID, the AnLF ID, and the first token. After the first token is successfully verified, the MTLF2 sends information about the model to the AnLF. This application helps implement model authorization and model acquisition in delegated model acquisition scenarios, and improves model security.

## Description

This application claims priority to Chinese Patent Application No. 202311428355.6, filed with the China National Intellectual Property Administration on October 30, 2023 and entitled "MODEL AUTHORIZATION METHOD, APPARATUS, AND READABLE STORAGE MEDIUM", which is incorporated herein by reference in its entirety.

### TECHNICAL FIELD

This application relates to the field of communication technologies, and in particular, to a model authorization method, an apparatus, and a readable storage medium.

### BACKGROUND

A network data analytics function (network data analytics function, NWDAF) network element is provided with capabilities of data collection, model training, data analytics, and model inference. An NWDAF network element containing analytics logical function (analytics logical function, AnLF) may be configured to perform inference and derive analytics information, and expose analytics services. An NWDAF network element containing model training logical function (model training logical function, MTLF) can be configured to: train machine learning (machine learning, ML) models or artificial intelligence (artificial intelligence, AI) models, and expose new training services, for example, provide trained AI/ML models. An analytics data repository function (analytics data repository functional, ADRF) network element can provide services for storing, deleting, and retrieving AI/ML models.

The AI/ML models may be stored in the ADRF network element in the following manner: A consumer (for example, the NWDAF network element containing MTLF) sends an Nadrf_MLModelManagement_Storage Request (Nadrf machine learning model management storage request) to the ADRF network element, where the Nadrf_MLModelManagement_Storage Request includes a model to be stored or an address of the model. The ADRF network element returns a response and provides a result indication. The AI/ML models may be retrieved from the ADRF network element in the following manner: The consumer (for example, the NWDAF network element containing AnLF) sends an Nadrf_MLModelManagement_Retrieval Request (Nadrf machine learning model management retrieval request) to the ADRF network element, where the Nadrf_MLModelManagement_Retrieval Request includes an analytics (Analytics) identifier (Identifier, ID) and a token (token). The ADRF network element performs identity authentication on the consumer (for example, the NWDAF network element containing MTLF), and verifies whether the token (token) and a network function (network function, NF) instance identifier (NF instance ID, which may be referred to as an NF ID for short) of the consumer (for example, the NWDAF network element containing MTLF) are included in an allowed NF consumer (NF consumer, NFc) list (allowed NFc list) of the ML model. If both verifications are successful, the ADRF network element returns a response providing a result indication.

Currently, authorization is required prior to model acquisition/retrieval. However, in some scenarios, model authorization still present security issues.

### SUMMARY

Embodiments of this application provide a model authorization method, an apparatus, and a readable storage medium, to help implement model authorization and model acquisition in delegated model acquisition scenarios, and improve security of a model in the delegated model acquisition scenario.

The following describes this application from different aspects. It should be understood that the following implementations and beneficial effects of different aspects may be mutually referenced.

According to a first aspect, this application provides a model authorization method. The method includes: A first model training logical function network element receives a first model retrieval request from an analytics logical function network element. The first model retrieval request includes an analytics identifier, and the first model retrieval request is used to request information about a model corresponding to the analytics identifier. The first model training logical function network element sends a token get request to a network repository function (network repository function, NRF) network element. The token get request contains the analytics identifier, an identifier of the analytics logical function network element, and an identifier of a second model training logical function network element, and the second model training logical function network element is used to provide the information about the model corresponding to the analytics identifier. The first model training logical function network element receives a first token from the NRF network element. The first token includes the identifier of the analytics logical function network element and the identifier of the second model training logical function network element. The first model training logical function network element sends a second model retrieval request to the second model training logical function network element. The second model retrieval request includes the analytics identifier, the identifier of the analytics logical function network element, and the first token, and the second model retrieval request is used to obtain the information about the model corresponding to the analytics identifier for the analytics logical function network element.

In this application, an identifier of each type of network element may be a network function instance identifier (NF instance ID). Details are not described below. For example, the identifier of the analytics logical function network element is an NF instance ID of the analytics logical function network element. For another example, the identifier of the second model training logical function network element is an NF instance ID of the second model training logical function network element. The NF instance ID may uniquely identify a network function instance (NF Instance ID: Unique identity of the NF Instance).

For example, the first token in the second model retrieval request may be used to verify the second model retrieval request. Alternatively, the first token in the second model retrieval request may be used to check various identifiers in the second model retrieval request. Alternatively, the first token in the second model retrieval request may be used to check permission of the analytics logical function network element to obtain a model (the model may be the model corresponding to the analytics ID) from the second model training logical function network element. Alternatively, the first token in the second model retrieval request may be used to check permission of the first model training logical function network element to obtain, for (or on behalf of (behalf)) the analytics logical function network element, a model (the model may be the model corresponding to the analytics ID) from the second model training logical function network element.

For example, the first model training logical function network element may be a first network element having a model training logical function, for example, a first NWDAF network element containing MTLF (an NWDAF1 containing MTLF), which may be referred to as an MTLF 1 for short. The second model training logical function network element may be a second network element having a model training logical function, for example, a second NWDAF network element containing MTLF (an NWDAF2 containing MTLF), which may be referred to as an MTLF2 for short. The analytics logical function network element may be a network element having an analytics logical function, for example, an NWDAF network element containing AnLF (an NWDAF containing AnLF), which may be referred to as an AnLF for short.

For example, the token get request may be used to request the first token. In other words, the token get request may be used to request (the NRF network element) to authorize the analytics logical function network element to obtain the model corresponding to the analytics ID from the second model training logical function network element. In other words, the token get request may be used by the first model training logical function network element to request, for (or on behalf of (behalf)) the analytics logical function network element, the first token for obtaining the model corresponding to the analytics ID. The first token may indicate that the analytics logical function network element is authorized to obtain the information about the model corresponding to the analytics ID from the second model training logical function network element. Alternatively, the first token may indicate that the first model training logical function network element is authorized to obtain, for (or on behalf of (behalf)) the analytics logical function network element, the information about the model corresponding to the analytics ID from the second model training logical function network element.

In a conventional technology, only a case in which an NF service consumer directly obtains/retrieves a model from a model provider (for example, the NWDAF containing MTLF) is considered. However, in a delegated model acquisition scenario, the model provider or a model producer cannot verify whether a model consumer has permission to obtain a model requested by the model consumer. There is a security problem.

In this application, after receiving the model retrieval request of the analytics logical function network element, the first model training logical function network element requests an authorization token (namely, the first token) from the NRF for (or on behalf of (behalf)) the analytics logical function network element. After obtaining the authorization token, the first model training logical function network element requests, for (or on behalf of (behalf)) the analytics logical function network element, information about a model that meets a requirement from the second model training logical function network element. The request includes the identifier of the analytics logical function network element and the authorization token. This helps implement model authorization and model obtaining in the delegated obtaining scenario, and authorize an actual model consumer (namely, the analytics logical function network element) in the delegated model acquisition scenario, to improve model security.

With reference to the first aspect, in a possible implementation, the token get request further contains one or more of the following: an identifier of the first model training logical function network element, a vendor identifier of the analytics logical function network element, or first indication information. The vendor identifier of the analytics logical function network element may be used by the NRF network element to verify whether the analytics logical function network element can be authorized to obtain the model corresponding to the analytics ID from the second model training logical function network element. The first indication information may indicate that the first model training logical function network element requests the first token for (or on behalf of (behalf)) the analytics logical function network element. In other words, the first indication information may indicate that the NRF network element is to be requested to authorize the analytics logical function network element to obtain the model in the second model training logical function network element. Alternatively, the first indication information may indicate that the token get request is an access token get request (an Nnrf_AccessToken_AccessToken_Get request) in the delegated model acquisition scenario.

In this application, the token get request contains the vendor identifier of the analytics logical function network element. This helps the NRF network element verify whether the analytics logical function network element has the permission to obtain the model from the second model training logical function network element. In this application, the first indication information is included in the token get request, so that a meaning of the token get request can be clearer, and the NRF network element can determine behavior of the NRF network element.

With reference to the first aspect, in a possible implementation, after receiving the token get request from the first model training logical function network element, the NRF network element may verify whether the vendor identifier of the analytics logical function network element is included in an interoperability indicator corresponding to the analytics ID of the second model training logical function network element. In other words, after receiving the token get request, the NRF network element may verify whether the analytics logical function network element has the permission to obtain the model from the second model training logical function network element. For a specific verification manner, refer to descriptions in the following method embodiment. Details are not described herein. If the vendor identifier of the analytics logical function network element is in the interoperability indicator corresponding to the analytics ID of the second model training logical function network element, it indicates that the analytics logical function network element has the permission to obtain the model from the second model training logical function network element, and the NRF network element sends the first token to the first model training logical function network element.

With reference to the first aspect, in a possible implementation, the first token further includes one or more of the following: the analytics identifier, the identifier of the first model training logical function network element, the vendor identifier of the analytics logical function network element, or second indication information. The second indication information may indicate that the analytics logical function network element is authorized to obtain the information about the model corresponding to the analytics ID from the second model training logical function network element. The second indication information may indicate that the first model training logical function network element is authorized to obtain, for (or on behalf of (behalf)) the analytics logical function network element, the information about the model corresponding to the analytics ID from the second model training logical function network element. Alternatively, the second indication information may indicate that the first token is an authorization token in the delegated model acquisition scenario.

In this application, the first token includes the second indication information, so that a meaning of the first token can be clearer. This helps the first model training logical function network element clearly determine a function of the first token.

With reference to the first aspect, in a possible implementation, the second model retrieval request further contains one or more of the following: the identifier of the first model training logical function network element, an address of the analytics logical function network element, the vendor identifier of the analytics logical function network element, or third indication information. The address of the analytics logical function network element may be carried via a subscription endpoint address. The subscription endpoint address may indicate an address for receiving a model notification message. The third indication information may indicate that the first model training logical function network element obtains, for (or on behalf of (behalf)) the analytics logical function network element, the information about the model corresponding to the analytics ID. Alternatively, the third indication information may indicate that the second model retrieval request is an ML model provision request (Nnwdaf_MLModelProvision request) in the delegated model acquisition scenario.

In this application, the address of the analytics logical function network element is included in the second model retrieval request. This helps the second model training logical function network element determine a receiver of the model notification message. In this application, the vendor identifier of the analytics logical function network element is included in the second model retrieval request. This helps the second model training logical function network element verify whether the analytics logical function network element has the permission to obtain the model from the second model training logical function network element. In this application, the third indication information is included in the second model retrieval request, so that a meaning of the second model retrieval request can be clearer, and the second model training logical function network element can determine behavior of the second model training logical function network element.

With reference to the first aspect, in a possible implementation, after receiving the second model retrieval request, the second model training logical function network element may verify the first token in the second model retrieval request. For a specific verification manner, refer to descriptions in the following method embodiment. Details are not described herein. When the first token is successfully verified, the second model training logical function network element may send the model notification message to the analytics logical function network element. The model notification message may include the information about the model corresponding to the analytics ID, for example, a model identifier, an address of the model in the second model training logical function network element, or a model file. For example, the model notification message may further include an identifier of an ADRF network element that stores the model.

With reference to the first aspect, in a possible implementation, before the first model training logical function network element sends the token get request to the NRF network element, the method further includes: The first model training logical function network element sends a network element discovery request to the NRF network element. The network element discovery request includes the analytics identifier, the identifier of the analytics logical function network element, and/or the vendor identifier of the analytics logical function network element. The first model training logical function network element receives a network element discovery response from the NRF network element. The network element discovery response includes a candidate network element list, the network element list includes the second model training logical function network element, and the interoperability indicator corresponding to the analytics identifier of the second model training logical function network element includes the vendor identifier of the analytics logical function network element.

It may be understood that, in a network element registration process, the first model training logical function network element and the second model training logical function network element may register their analytics IDs and interoperability indicators with the NRF network element. The analytics logical function network element may register its analytics ID and vendor ID with the NRF network element. The interoperability indicator may indicate a list of NWDAF providers (or vendors (vendors)) that are allowed to retrieve ML models from the NWDAF containing MTLF.

With reference to the first aspect, in a possible implementation, after receiving the network element discovery request, the NRF network element may obtain the vendor identifier of the analytics logical function network element based on the network element discovery request; then may determine a candidate network element list based on a locally stored NF profile of each network element; and send the network element discovery response to the first model training logical function network element. The network element discovery response includes the candidate network element list. For a manner in which the NRF network element determines the candidate network element list, refer to descriptions in the following method embodiment. Details are not described herein. The interoperability indicator corresponding to the analytics ID of each model training logical function network element in the candidate network element list includes the vendor identifier of the analytics logical function network element. The second model training logical function network element may be any network element in the candidate network element list.

According to a second aspect, this application provides a model authorization method. The method includes: An NRF network element receives a token get request from a first model training logical function network element. The token get request contains an analytics identifier, an identifier of an analytics logical function network element, and an identifier of a second model training logical function network element, and the second model training logical function network element is used to provide information about a model corresponding to the analytics identifier. The NRF network element verifies whether a vendor identifier of the analytics logical function network element is included in an interoperability indicator corresponding to the analytics identifier of the second model training logical function network element. If the vendor identifier is included in the interoperability indicator, it indicates that the analytics logical function network element has permission to obtain the model from the second model training logical function network element. In this case, the NRF network element sends a first token to the first model training logical function network element. The first token includes the identifier of the analytics logical function network element and the identifier of the second model training logical function network element.

For example, the token get request may be used to request the first token. In other words, the token get request may be used to request (the NRF network element) to authorize the analytics logical function network element to obtain the model corresponding to the analytics ID from the second model training logical function network element. In other words, the token get request may be used by the first model training logical function network element to request, for (or on behalf of (behalf)) the analytics logical function network element, the first token for obtaining the model corresponding to the analytics ID. The first token may indicate that the analytics logical function network element is authorized to obtain the information about the model corresponding to the analytics ID from the second model training logical function network element. Alternatively, the first token may indicate that the first model training logical function network element is authorized to obtain, for (or on behalf of (behalf)) the analytics logical function network element, the information about the model corresponding to the analytics ID from the second model training logical function network element.

In this application, the first model training logical function network element requests an authorization token (namely, the first token) from the NRF for (or on behalf of (behalf)) the analytics logical function network element. The request includes at least the identifier of the analytics logical function network element and the identifier of the second model training logical function network element. After verifying that the analytics logical function network element has the permission to obtain the model from the second model training logical function network element, the NRF returns the authorization token (namely, the first token) to the first model training logical function network element. This helps the first model training logical function network element obtain the model from the second model training logical function network element for (or on behalf of (behalf)) the analytics logical function network element, to improve model security.

With reference to the second aspect, in a possible implementation, before the NRF network element verifies whether the vendor identifier of the analytics logical function network element is included in the interoperability indicator corresponding to the analytics identifier of the second model training logical function network element, the method further includes: The NRF network element obtains the interoperability indicator corresponding to the analytics identifier of the second model training logical function network element from an NF profile corresponding to the identifier of the second model training logical function network element. The interoperability indicator may indicate a list of NWDAF providers (or vendors (vendors)) that are allowed to retrieve ML models from the NWDAF containing MTLF.

With reference to the second aspect, in a possible implementation, before the NRF network element verifies whether the vendor identifier of the analytics logical function network element is included in the interoperability indicator of the second model training logical function network element, the method further includes: The NRF network element obtains the vendor identifier of the analytics logical function network element from an NF profile corresponding to the identifier of the analytics logical function network element.

With reference to the second aspect, in a possible implementation, the token get request further contains one or more of the following: an identifier of the first model training logical function network element, the vendor identifier of the analytics logical function network element, or first indication information. The analytics ID may be an identifier of an analytics service corresponding to a model for which authorization is requested. The vendor identifier of the analytics logical function network element may be used by the NRF network element to verify whether the analytics logical function network element can be authorized to obtain the model corresponding to the analytics ID from the second model training logical function network element. The first indication information may indicate that the first model training logical function network element requests the first token for (or on behalf of (behalf)) the analytics logical function network element. In other words, the first indication information may indicate that the NRF network element is to be requested to authorize the analytics logical function network element to obtain the model in the second model training logical function network element. Alternatively, the first indication information may indicate that the token get request is an access token get request (an Nnrf_AccessToken_Get request) in a delegated model acquisition scenario.

With reference to the second aspect, in a possible implementation, the first token further includes one or more of the following: the analytics identifier, the identifier of the first model training logical function network element, the vendor identifier of the analytics logical function network element, or second indication information. The second indication information may indicate that the analytics logical function network element is authorized to obtain the information about the model corresponding to the analytics ID from the second model training logical function network element. The second indication information may indicate that the first model training logical function network element is authorized to obtain, for (or on behalf of (behalf)) the analytics logical function network element, the information about the model corresponding to the analytics ID from the second model training logical function network element. Alternatively, the second indication information may indicate that the first token is an authorization token in the delegated model acquisition scenario.

With reference to the second aspect, in a possible implementation, before the NRF network element receives the token get request from the first model training logical function network element, the method further includes: The NRF network element receives a network element discovery request from the first model training logical function network element. The network element discovery request includes the analytics identifier, the identifier of the analytics logical function network element, and/or the vendor identifier of the analytics logical function network element. The NRF network element obtains the vendor identifier of the analytics logical function network element based on the network element discovery request. The NRF network element determines a candidate network element list based on a stored NF profile of each network element. The NRF network element sends a network element discovery response to the first model training logical function network element. The network element discovery response includes the candidate network element list. The interoperability indicator corresponding to the analytics ID of each model training logical function network element in the candidate network element list includes the vendor identifier of the analytics logical function network element. The second model training logical function network element may be any network element in the candidate network element list. Therefore, the interoperability indicator corresponding to the analytics identifier of the second model training logical function network element includes the vendor identifier of the analytics logical function network element.

For example, the network element discovery request includes the identifier of the analytics logical function network element. That the NRF network element obtains the vendor identifier of the analytics logical function network element based on the network element discovery request includes: The NRF network element obtains the vendor identifier of the analytics logical function network element from the NF profile corresponding to the identifier of the analytics logical function network element.

According to a third aspect, this application provides a model authorization method. The method includes: A second model training logical function network element receives a second model retrieval request from a first model training logical function network element. The second model retrieval request includes an analytics identifier, an identifier of an analytics logical function network element, and a first token, and the second model retrieval request is used to obtain information about a model corresponding to the analytics identifier for the analytics logical function network element. The second model training logical function network element verifies the first token. When the first token is successfully verified, the second model training logical function network element sends a model notification message to the analytics logical function network element. The model notification message includes the information about the model corresponding to the analytics identifier. For a specific verification manner of the first token, refer to descriptions in the following method embodiment. Details are not described herein.

In this application, after receiving the request for obtaining a model by the first model training logical function network element for or on behalf of the analytics logical function network element, the second model training logical function network element verifies validity of the token, and after the token is successfully verified, sends, to the analytics logical function network element, information about a model that meets requirements. Model acquisition in delegated model acquisition scenarios is improved, and an actual model consumer (namely, the analytics logical function network element) is verified in the delegated model acquisition scenario, to improve model security.

With reference to the third aspect, in a possible implementation, the second model retrieval request further contains one or more of the following: an identifier of the first model training logical function network element, an address of the analytics logical function network element, a vendor identifier of the analytics logical function network element, or third indication information. The address of the analytics logical function network element may be carried via a subscription endpoint address. The subscription endpoint address may indicate an address for receiving the model notification message. The third indication information may indicate that the first model training logical function network element obtains, for (or on behalf of (behalf)) the analytics logical function network element, the information about the model corresponding to the analytics ID. Alternatively, the third indication information may indicate that the second model retrieval request is an ML model provision request (Nnwdaf_MLModelProvision request) in the delegated model acquisition scenario.

With reference to the third aspect, in a possible implementation, the model notification message further includes an identifier of an ADRF network element that stores the model.

With reference to the third aspect, in a possible implementation, when the first token is successfully verified, the second model training logical function network element may store the identifier of the analytics logical function network element as part of an allowed NF consumer list (allowed NFc list). The allowed NFc list is associated with the model corresponding to the analytics ID. In other words, the allowed NFc list is a list of network function instance identifiers that are allowed to obtain/retrieve the model corresponding to the analytics ID.

In this application, after the first token is successfully verified, the identifier of the analytics logical function network element is added to the allowed NF consumer list. This helps the analytics logical function network element subsequently obtain a model again.

According to a fourth aspect, this application provides a model authorization method. The method includes: A source analytics logical function network element receives an analytics context transfer request from a target analytics logical function network element. The analytics context transfer request includes an identifier of an analytics context, and the analytics context transfer request is used to request to transfer information about a first model in the analytics context. The source analytics logical function network element sends a token get request to an NRF network element. The token get request contains an analytics identifier corresponding to the first model, an identifier of the target analytics logical function network element, and an identifier of a model training logical function network element, and the model training logical function network element is used to provide the information about the first model. The source analytics logical function network element receives a first token from the NRF network element. The first token includes the identifier of the target analytics logical function network element and the identifier of the model training logical function network element. The source analytics logical function network element sends a model retrieval request to the model training logical function network element. The model retrieval request includes the analytics identifier, the identifier of the target analytics logical function network element, and the first token, and the model retrieval request is used to obtain the information about the first model for the target analytics logical function network element.

It may be understood that the identifier of the analytics context may be a subscription correlation identifier (Subscription Correlation ID). The subscription correlation identifier may identify an analytics subscription that requests a related analytics context. The analytics context may include model-related information, for example, an identifier of a model producer/provider/trainer (for example, an NWDAF containing MTLF), an identifier of a model, a file address of the model, or an analytics identifier of the model. It may be understood that the analytics context may include identifiers of a plurality of model producers/providers/trainers (for example, NWDAFs containing MTLF). For ease of brevity, in this application, one model producer/provider/trainer providing a model is used as an example for description. The analytics context transfer request may be used to request to transfer information about one or more models in the analytics context. For brevity, in this embodiment of this application, an example in which the analytics context transfer request is used to request to transfer the information about the first model in the analytics context is used for description.

For example, the first token in the model retrieval request may be used to check the model retrieval request. Alternatively, the first token in the model retrieval request may be used to check various identifiers in the model retrieval request. Alternatively, the first token in the model retrieval request may be used to check permission of the target analytics logical function network element to obtain the first model from the model training logical function network element. Alternatively, the first token in the model retrieval request may be used to check permission of the source analytics logical function network element to obtain, for (or on behalf of (behalf)) the target analytics logical function network element, the first model from the model training logical function network element.

The source analytics logical function network element may be a network element having an analytics logical function network element, for example, a source NWDAF network element containing AnLF (a Source NWDAF containing AnLF), which may be referred to as a source AnLF (a Source AnLF) for short. The target analytics logical function network element may be another network element having an analytics logical function network element, for example, a target NWDAF network element containing AnLF (a Target NWDAF containing AnLF), which may be referred to as a target AnLF (a Target AnLF) for short. The model training logical function network element may be a network element having a model training logical function, for example, an NWDAF network element containing MTLF (an NWDAF containing MTLF), which may be referred to as an MTLF for short.

For example, the token get request may be used to request the first token. In other words, the token get request may be used to request (the NRF network element) to authorize the target analytics logical function network element to obtain the first model from the model training logical function network element. In other words, the token get request may be used by the source analytics logical function network element to request, for (or on behalf of (behalf)) the target analytics logical function network element, the first token for obtaining the first model. The first token may indicate that the target analytics logical function network element is authorized to obtain the information about the first model from the model training logical function network element. Alternatively, the first token may indicate that the source analytics logical function network element is authorized to obtain, for (or on behalf of (behalf)) the target analytics logical function network element, the information about the first model from the model training logical function network element.

In this application, after receiving the analytics context transfer request of the target analytics logical function network element, the source analytics logical function network element requests an authorization token (namely, the first token) from the NRF for (or on behalf of (behalf)) the target analytics logical function network element. The request includes the identifier of the target analytics logical function network element and the identifier of the model training logical function network element. After obtaining the authorization token, the source analytics logical function network element requests, for (or on behalf of (behalf)) the target analytics logical function network element, the information about the first model from the model training logical function network element. The request includes the identifier of the target analytics logical function network element and the authorization token. This helps implement model authorization and model acquisition in delegated model acquisition scenarios, and authorize an actual model consumer (namely, the target analytics logical function network element) in the delegated model acquisition scenarios, to improve model security.

With reference to the fourth aspect, in a possible implementation, after receiving the analytics context transfer request, the source analytics logical function network element may return analytics context information to the target analytics logical function network element. The analytics context information may include other information in the analytics context transfer request other than the model-related information, for example, an active data source identifier (ID) and a subscription correlation identifier.

For example, the model-related information includes but is not limited to: the identifier of the model producer/provider/trainer (for example, the NWDAF containing MTLF), the identifier of the model, the file address of the model, or the analytics identifier corresponding to the model.

With reference to the fourth aspect, in a possible implementation, the analytics context transfer request further includes one or both of the following: a second operation indicator of the target analytics logical function network element or a vendor identifier of the target analytics logical function network element. The second operation indicator may indicate models that are available to the target analytics logical function network element and a provider/producer of these models.

For example, if the operation indicator corresponds to an AnLF, that is, one AnLF corresponds to one operation indicator, the operation indicator may include a vendor identifier list (or vendor list), or may be described as an NWDAF provider (or vendor) list. The AnLF allows retrieval or usage of a model provided by a vendor in the vendor list. The operation indicator also indicates that AnLF supports usage of a model provided by a network element (for example, an NWDAF) of a vendor in the vendor list. That is, the operation indicator is applicable per analytics identifier.

For example, if the operation indicator corresponds to the analytics identifier, that is, one AnLF may correspond to one or more operation indicators, different operation indicators may correspond to different analytics identifiers. An operation indicator corresponding to one analytics identifier includes a vendor identifier list (or vendor list), or may be described as an NWDAF provider (or vendor) list. The AnLF allows retrieval or usage of a model provided by a vendor in the vendor list. The operation indicator also indicates that AnLF supports usage of models provided by a network element (for example, an NWDAF) of a vendor in the vendor list, and the models correspond to an analytics identifier.

This application provides a new operation indicator, indicating specific models of specific vendors supported by an analytics logical function network element. This helps subsequently verify whether an actual consumer of the model has a capability or permission to use a specified model.

With reference to the fourth aspect, in a possible implementation, before the source analytics logical function network element sends the token get request to the NRF network element, the method further includes: The source analytics logical function network element determines that a provider of the first model is located in the second operation indicator of the target analytics logical function network element. In other words, the source analytics logical function network element may determine that the target analytics logical function network element has a capability or permission to use the model in the foregoing analytics context.

With reference to the fourth aspect, in a possible implementation, before the source analytics logical function network element sends the token get request to the NRF network element, the method further includes: The source analytics logical function network element determines that the vendor identifier of the target analytics logical function network element is included in an interoperability indicator of an information provider of the first model (or a producer of the first model, for example, an MTLF). In other words, the source analytics logical function network element may determine whether the target analytics logical function network element can retrieve/obtain the first model.

With reference to the fourth aspect, in a possible implementation, before the source analytics logical function network element receives the analytics context transfer request from the target analytics logical function network element, the method further includes: The source analytics logical function network element sends a network element registration request to the NRF network element. The network element registration request includes a first operation indicator of the source analytics logical function network element. The first operation indicator may indicate models that are available to the source analytics logical function network element and a provider/producer of these models.

In this application, the source analytics logical function network element registers the operation indicator of the source analytics logical function network element with the NRF network element in a network element registration procedure, to facilitate subsequent verification of the NRF network element.

With reference to the fourth aspect, in a possible implementation, the token get request further contains one or more of the following: an identifier of the source analytics logical function network element, the vendor identifier of the target analytics logical function network element, an identifier of the first model, or first indication information. The vendor identifier of the target analytics logical function network element may be used by the NRF network element to verify whether the target analytics logical function network element can be authorized to obtain the first model from the model training logical function network element. The first indication information may indicate that the source analytics logical function network element requests the first token for (or on behalf of (behalf)) the target analytics logical function network element. In other words, the first indication information may indicate that the NRF network element is to be requested to authorize the target analytics logical function network element to obtain the first model in the model training logical function network element. Alternatively, the first indication information may indicate that the token get request is an access token get request (an Nnrf_AccessToken_AccessToken_Get request) in the delegated model acquisition scenario.

In this application, the token get request contains the vendor identifier of the target analytics logical function network element. This helps the NRF network element verify whether the target analytics logical function network element has the permission to obtain the first model from the model training logical function network element. In this application, the first indication information is included in the token get request, so that a meaning of the token get request can be clearer, and the NRF network element can determine behavior of the NRF network element.

With reference to the fourth aspect, in a possible implementation, after receiving the token get request from the source analytics logical function network element, the NRF network element may verify whether the vendor identifier of the target analytics logical function network element is included in an interoperability indicator corresponding to the analytics identifier of the model training logical function network element. In other words, after receiving the token get request, the NRF network element may verify whether the target analytics logical function network element has the permission to obtain the first model from the model training logical function network element. If the vendor identifier is included in the interoperability indicator, it indicates that the target analytics logical function network element has the permission to obtain the first model from the model training logical function network element. The NRF network element sends the first token to the source analytics logical function network element. The first token includes the identifier of the target analytics logical function network element and the identifier of the model training logical function network element.

With reference to the fourth aspect, in a possible implementation, the first token further includes one or more of the following: the analytics identifier, the identifier of the source analytics logical function network element, the vendor identifier of the target analytics logical function network element, the identifier of the first model, or second indication information. The second indication information may indicate that the target analytics logical function network element is authorized to obtain the information about the first model from the model training logical function network element. Alternatively, the second indication information may indicate that the source analytics logical function network element is authorized to obtain, for (or on behalf of (behalf)) the target analytics logical function network element, the information about the first model from the model training logical function network element. Alternatively, the second indication information may indicate that the first token is an authorization token in the delegated model acquisition scenario.

In this application, the first token includes the second indication information, so that a meaning of the first token can be clearer. This helps the model training logical function network element clearly determine a function of the first token.

With reference to the fourth aspect, in a possible implementation, the model retrieval request further contains one or more of the following: the identifier of the source analytics logical function network element, an address of the target analytics logical function network element, the identifier of the first model, the vendor identifier of the target analytics logical function network element, or third indication information. The address of the target analytics logical function network element may be carried via a subscription endpoint address. The subscription endpoint address may indicate an address for receiving the model notification message. The third indication information may indicate that the source analytics logical function network element is to obtain the information about the first model for (or on behalf of (behalf)) the target analytics logical function network element. Alternatively, the third indication information may indicate that the model retrieval request is an ML model provision request (Nnwdaf_MLModelProvision request) in the delegated model acquisition scenario.

In this application, the address of the target analytics logical function network element is included in the model retrieval request. This helps the model training logical function network element determine a receiver of the model notification message. In this application, the vendor identifier of the target analytics logical function network element is included in the model retrieval request. This helps the model training logical function network element verify whether the target analytics logical function network element has the permission to obtain the model from the model training logical function network element. In this application, the third indication information is included in the model retrieval request, so that a meaning of the model retrieval request can be clearer, and the model training logical function network element can determine behavior of the model training logical function network element.

With reference to the fourth aspect, in a possible implementation, after receiving the model retrieval request, the model training logical function network element may verify the first token in the model retrieval request. For a specific verification manner, refer to descriptions in the following method embodiment. Details are not described herein. When the first token is successfully verified, the model training logical function network element may send the model notification message to the target analytics logical function network element. The model notification message may include the information about the first model, for example, the identifier of the first model, an address of the first model in the model training logical function network element, or a model file of the first model. For example, the model notification message may further include an identifier of an ADRF network element that stores the first model.

According to a fifth aspect, this application provides a model authorization method. The method includes: An NRF network element receives a token get request from a source analytics logical function network element. The token get request contains an analytics identifier, an identifier of a target analytics logical function network element, and an identifier of a model training logical function network element, and the model training logical function network element is used to provide information about a first model corresponding to the analytics identifier. The NRF network element verifies whether a vendor identifier of the target analytics logical function network element is included in an interoperability indicator corresponding to the analytics identifier of the model training logical function network element. If the vendor identifier is included in the interoperability indicator, the NRF network element sends a first token to the source analytics logical function network element. The first token includes the identifier of the target analytics logical function network element and the identifier of the model training logical function network element.

For example, the token get request may be used to request the first token. In other words, the token get request may be used to request (the NRF network element) to authorize the target analytics logical function network element to obtain the first model from the model training logical function network element. In other words, the token get request may be used by the source analytics logical function network element to request, for (or on behalf of (behalf)) the target analytics logical function network element, the first token for obtaining the first model. The first token may indicate that the target analytics logical function network element is authorized to obtain the information about the first model from the model training logical function network element. Alternatively, the first token may indicate that the source analytics logical function network element is authorized to obtain, for (or on behalf of (behalf)) the target analytics logical function network element, the information about the first model from the model training logical function network element.

In this application, the NRF network element receives the token get request of the source analytics logical function network element. The request includes the identifier of the target analytics logical function network element and the identifier of the model training logical function network element. After verifying that the target analytics logical function network element has permission to obtain the first model from the model training logical function network element, the NRF returns the authorization token (namely, the first token) to the source analytics logical function network element. This helps the source analytics logical function network element obtain, for (or on behalf of (behalf)) of the target analytics logical function network element, the model from the model training logical function network element. This can improve model security.

With reference to the fifth aspect, in a possible implementation, before the NRF network element verifies whether the vendor identifier of the target analytics logical function network element is included in the interoperability indicator of the model training logical function network element, the method further includes: The NRF network element obtains the interoperability indicator corresponding to the analytics identifier of the model training logical function network element from an NF profile corresponding to the identifier of the model training logical function network element.

With reference to the fifth aspect, in a possible implementation, before the NRF network element verifies whether the vendor identifier of the target analytics logical function network element is included in the interoperability indicator of the model training logical function network element, the method further includes: The NRF network element obtains the vendor identifier of the target analytics logical function network element from an NF profile corresponding to the identifier of the target analytics logical function network element.

With reference to the fifth aspect, in a possible implementation, the token get request further contains one or more of the following: an identifier of the source analytics logical function network element, the vendor identifier of the target analytics logical function network element, an identifier of the first model, or first indication information. The vendor identifier of the target analytics logical function network element may be used by the NRF network element to verify whether the target analytics logical function network element can be authorized to obtain the first model from the model training logical function network element. The first indication information may indicate that the source analytics logical function network element requests the first token for (or on behalf of (behalf)) the target analytics logical function network element. In other words, the first indication information may indicate that the NRF network element is to be requested to authorize the target analytics logical function network element to obtain the first model in the model training logical function network element. Alternatively, the first indication information may indicate that the token get request is an access token get request (an Nnrf_AccessToken_AccessToken_Get request) in the delegated model acquisition scenario.

With reference to the fifth aspect, in a possible implementation, the first token further includes one or more of the following: the analytics identifier, the identifier of the source analytics logical function network element, the vendor identifier of the target analytics logical function network element, the identifier of the first model, or second indication information. The second indication information indicates that the target analytics logical function network element is authorized to obtain the information about the first model from the model training logical function network element. Alternatively, the second indication information may indicate that the source analytics logical function network element is authorized to obtain, for (or on behalf of (behalf)) the target analytics logical function network element, the information about the first model from the model training logical function network element. Alternatively, the second indication information may indicate that the first token is an authorization token in the delegated model acquisition scenario.

With reference to the fifth aspect, in a possible implementation, before the NRF network element receives the token get request from the source analytics logical function network element, the method further includes: The NRF network element receives a first network element registration request from the source analytics logical function network element. The first network element registration request includes a first operation indicator of the source analytics logical function network element. The first operation indicator indicates models that are available to the source analytics logical function network element and a provider/producer of these models.

With reference to the fifth aspect, in a possible implementation, before the NRF network element receives the token get request from the source analytics logical function network element, the method further includes: The NRF network element receives a second network element registration request from the target analytics logical function network element. The second network element registration request includes a second operation indicator of the target analytics logical function network element. The second operation indicator indicates models that are available to the target analytics logical function network element and providers/producers of these models.

According to a sixth aspect, this application provides a model authorization method. The method includes: A model training logical function network element receives a model retrieval request from a source analytics logical function network element. The model retrieval request includes an analytics identifier, an identifier of a target analytics logical function network element, and a first token, and the model retrieval request is used to obtain information about a first model corresponding to the analytics identifier for the target analytics logical function network element. The model training logical function network element verifies the first token. When the first token is successfully verified, the model training logical function network element sends a model notification message to the target analytics logical function network element. The model notification message includes the information about the first model. For a verification manner of the first token, refer to descriptions in the following method embodiment. Details are not described herein.

In this application, after receiving the request for obtaining the first model by the source analytics logical function network element for or on behalf of the target analytics logical function network element, the model training logical function network element verifies validity of the token, and after the token is successfully verified, sends the information about the first model to the target analytics logical function network element. Model acquisition in delegated model acquisition scenarios is improved, and an actual model consumer (namely, the target analytics logical function network element) is verified in the delegated model acquisition scenarios, to improve model security.

With reference to the sixth aspect, in a possible implementation, the model retrieval request further contains one or more of the following: an identifier of the source analytics logical function network element, an address of the target analytics logical function network element, an identifier of the first model, a vendor identifier of the target analytics logical function network element, or third indication information. The address of the target analytics logical function network element may be carried via a subscription endpoint address. The subscription endpoint address may indicate an address for receiving the model notification message. The third indication information may indicate that the source analytics logical function network element is to obtain the information about the first model for (or on behalf of (behalf)) the target analytics logical function network element. Alternatively, the third indication information may indicate that the model retrieval request is an ML model provision request (Nnwdaf_MLModelProvision request) in the delegated model acquisition scenario.

With reference to the sixth aspect, in a possible implementation, the model notification message further includes an identifier of an ADRF network element that stores the first model.

With reference to the sixth aspect, in a possible implementation, when the first token is successfully verified, the model training logical function network element may store the identifier of the target analytics logical function network element as part of an allowed NF consumer list (allowed NFc list). The allowed NFc list is associated with the first model. In other words, the allowed NFc list is a list of network function instance identifiers that are allowed to obtain/retrieve the first model.

In this application, after the first token is successfully verified, the identifier of the target analytics logical function network element is added to the allowed NF consumer list. This helps the target analytics logical function network element subsequently obtain the first model again.

According to a seventh aspect, this application provides a communication apparatus. The communication apparatus may be a first model training logical function network element, a second model training logical function network element, an NRF network element, or a chip in the first model training logical function network element, the second model training logical function network element, or the NRF network element. The communication apparatus includes a unit and/or module configured to perform the method according to any one of the first aspect to the third aspect or any one of the possible implementations of any one of the first aspect to the third aspect, for example, a transceiver unit and/or a processing unit. The transceiver unit is configured to receive/send various information or signaling. Therefore, beneficial effects (or advantages) of the method according to any one of the first aspect to the third aspect can also be implemented.

According to an eighth aspect, this application provides a communication apparatus. The communication apparatus may be a source analytics logical function network element, a target analytics logical function network element, an NRF network element, or a chip in the source analytics logical function network element, the target analytics logical function network element, or the NRF network element. The communication apparatus includes a unit and/or module configured to perform the method according to any one of the fourth aspect to the sixth aspect or any one of the possible implementations of any one of the fourth aspect to the sixth aspect, for example, a transceiver unit and/or a processing unit. The transceiver unit is configured to receive/send various information or signaling. Therefore, beneficial effects (or advantages) of the method according to any one of the fourth aspect to the sixth aspect can also be implemented.

According to a ninth aspect, this application provides a communication apparatus. The communication apparatus includes a processor, configured to perform the method according to any one of the first aspect to the third aspect or any one of the possible implementations of any one of the first aspect to the third aspect. Alternatively, the processor is configured to execute a program stored in a memory, and when the program is executed, the method according to any one of the first aspect to the third aspect or any one of the possible implementations of any one of the first aspect to the third aspect is performed.

With reference to the ninth aspect, in a possible implementation, the memory is located outside the communication apparatus.

With reference to the ninth aspect, in a possible implementation, the memory is located inside the communication apparatus.

In this application, the processor and the memory may alternatively be integrated into one device. That is, the processor and the memory may alternatively be integrated together.

With reference to the ninth aspect, in a possible implementation, the communication apparatus further includes a transceiver. The transceiver is configured to send or receive various information, for example, receive a first model retrieval request, send or receive a token get request, send or receive a second model retrieval request, send or receive a first token, and the like.

According to a tenth aspect, this application provides a communication apparatus. The communication apparatus includes a processor, configured to perform the method according to any one of the fourth aspect to the sixth aspect or any one of the possible implementations of any one of the fourth aspect to the sixth aspect. Alternatively, the processor is configured to execute a program stored in a memory, and when the program is executed, the method according to any one of the first aspect to the sixth aspect or any one of the possible implementations of any one of the first aspect to the sixth aspect is performed.

With reference to the tenth aspect, in a possible implementation, the memory is located outside the communication apparatus.

With reference to the tenth aspect, in a possible implementation, the memory is located inside the communication apparatus.

In this application, the processor and the memory may alternatively be integrated into one device. That is, the processor and the memory may alternatively be integrated together.

With reference to the tenth aspect, in a possible implementation, the communication apparatus further includes a transceiver. The transceiver is configured to send or receive various information, for example, receive a context transfer request, send or receive a token get request, send or receive a model retrieval request, send or receive a first token, and the like.

According to an eleventh aspect, this application provides a communication apparatus. The communication apparatus may include a processor and an interface circuit. The processor is connected to the interface circuit. The interface circuit is configured to exchange (or receive/send or input/output) information or data, and the processor is configured to run program instructions, so that the communication apparatus performs the method according to any one of the first aspect to the sixth aspect or any one of the possible implementations of any one of the first aspect to the sixth aspect. The interface circuit may be a communication interface or a transceiver. The transceiver may be a radio frequency module in the communication apparatus, a combination of a radio frequency module and an antenna, or an input/output interface of a chip or a circuit.

According to a twelfth aspect, this application provides a readable storage medium. The readable storage medium stores program instructions. When the program instructions are run on a communication apparatus, the communication apparatus is caused to perform the model authorization method according to any one of the first aspect to the sixth aspect or any one of the possible implementations of any one of the first aspect to the sixth aspect.

According to a thirteenth aspect, this application provides a program product including instructions. When the instructions are run, the model authorization method according to any one of the possible implementations of any one of the first aspect to the sixth aspect is performed.

According to a fourteenth aspect, this application provides a communication apparatus. The communication apparatus may be implemented in a form of a chip, or may be implemented in a form of a device. The apparatus includes a processor. The processor is configured to read and execute a program stored in a memory, to perform the model authorization method according to any one or more of the first aspect to the sixth aspect or any one or more of the possible implementations of any one of the first aspect to the sixth aspect. Optionally, the apparatus further includes a memory, and the memory is connected to the processor through a circuit. Further, optionally, the apparatus further includes a communication interface, and the processor is connected to the communication interface. The communication interface is configured to receive information and/or signaling that need/needs to be processed. The processor obtains the information and/or signaling from the communication interface, processes the information and/or signaling, and outputs a processing result through the communication interface. The communication interface may be an input/output interface.

Optionally, the processor and the memory may be physically independent units, or the memory may be integrated with the processor.

According to a fifteenth aspect, this application provides a communication system. The communication system includes the foregoing first model training logical function network element and the foregoing NRF network element, and optionally includes a second model training logical function network element and/or an analytics logical function network element.

According to a sixteenth aspect, this application provides a communication system. The communication system includes the source analytics logical function network element and the foregoing NRF network element, and optionally includes a model training logical function network element and/or a target analytics logical function network element.

For technical effects achieved in the foregoing aspects, refer to each other, or refer to beneficial effects in the following method embodiments. Details are not described herein.

### BRIEF DESCRIPTION OF DRAWINGS

FIG. 1 is a diagram of a system architecture according to an embodiment of this application;
FIG. 2A and FIG. 2B are a schematic flowchart of secured and authorized AI/ML model sharing according to an embodiment of this application;
FIG. 3A and FIG. 3B are a schematic flowchart of a model authorization method according to an embodiment of this application;
FIG. 4A and FIG. 4B are another schematic flowchart of a model authorization method according to an embodiment of this application;
FIG. 5 is a diagram of a structure of a communication apparatus according to an embodiment of this application;
FIG. 6 is a diagram of another structure of a communication apparatus according to an embodiment of this application; and
FIG. 7 is a diagram of still another structure of a communication apparatus according to an embodiment of this application.

### DESCRIPTION OF EMBODIMENTS

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. "At least one of the following items (pieces)", "one or more of the following items (pieces)", or a similar expression thereof means any combination of these items, including a singular item (piece) or any combination of plural items (pieces). For example, at least one of a, b, or c may indicate a, b, c, a and b, a and c, b and c, or a, b, and c, where a, b, and c may be singular or plural.

In descriptions of this application, words such as "first" and "second" are merely used to distinguish between different objects, and do not limit quantities and execution sequences. In addition, the words such as "first" and "second" do not indicate a definite difference. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In this application, a word like "example" or "for example" indicates giving an example, an illustration, or a description. Any embodiment or design scheme described as "example", "such as", or "for example" in this application should not be explained as being more preferred or having more advantages than another embodiment or design scheme. Exactly, use of the word "example", "such as", "for example", or the like is intended to present a related concept in a specific manner.

It should be understood that, in this application, "when", "if", and "provided that" mean that an apparatus performs corresponding processing in an objective situation, and are not intended to limit time. The terms do not mean that the apparatus needs to perform a determining action during implementation, and do not mean any other limitation either.

In this application, unless otherwise specified, an element indicated in a singular form is intended to indicate "one or more", but does not indicate "one and only one".

In addition, the terms "system" and "network" may be used interchangeably in this specification.

It may be understood that in embodiments of this application, similar expressions such as "B corresponding to A" and "A corresponds to/is associated with B" all indicate that there is a correspondence between A and B, and B may be determined based on A. However, it should be further understood that determining B based on A does not mean that B is determined based only on A. B may alternatively be determined based on A and/or other information.

The following briefly describes network elements and system architectures in this application.

A network data analytics function (network data analytics function, NWDAF) network element supports collecting data from another network function network element and an application function (application function, AF) network element, collecting data from an operation, administration, and maintenance (operation, administration, and maintenance, OAM) network element, providing analytics information for the another network function and the AF network element, and the like.

The NWDAF network element has functions such as data collection, model training, data analytics, and model inference. The NWDAF network element may be configured to: collect related data from a network function network element, a third-party service server, a terminal device, or a network management system, perform data analytics based on the related data to obtain an analytics result, and provide the analytics result for the network function network element, the third-party service server, the terminal device, or the network management system. The analytics result may assist a network in selecting a quality of service parameter of a service, assist the network in performing traffic routing, assist the network in selecting a background data transfer policy, or the like. In addition, the NWDAF network element may be further configured to: collect the related data from the network function network element, the third-party service server, the terminal device, or the network management system, perform model training based on the related data to obtain an artificial intelligence (artificial intelligence, AI) model or a machine learning (machine learning, ML) model, and provide the AI model/ML model for another NWDAF network element. The AI model/ML model may be used to assist the NWDAF network element in generating a data analytics result based on the related data.

An NWDAF network element containing AnLF (an NWDAF containing AnLF) may be configured to: perform inference, export analytics information (that is, export statistics information and/or a prediction based on an analytics consumer request), and expose an analytics service. An NWDAF network element containing MTLF (an NWDAF containing MTLF) may be configured to: train a machine learning (machine learning, ML) model, and expose a new training service, for example, provide a trained ML model.

For ease of description, in this application, the "NWDAF network element containing AnLF (the NWDAF containing AnLF) may be simply represented as an "AnLF", and in some cases, the NWDAF network element containing AnLF and the AnLF may be used interchangeably; and the "NWDAF network element containing MTLF (the NWDAF containing MTLF) may be simply represented as an "MTLF", and in some cases, the NWDAF network element containing MTLF and the MTLF may be used interchangeably.

An analytics data repository function (analytics data repository functional, ADRF) network element may provide services for storing, deleting, and retrieving AI/ML models. The ADRF network element may further provide data storage and retrieval services, and analytics storage and retrieval services. For example, a consumer sends a data management storage request (Nadrf Data Management Storage Request) to the ADRF network element, where the data management storage request includes data or analytics to be stored. Alternatively, a consumer sends a data management storage subscription request (Nadrf Data Management Storage Subscription Request) to the ADRF network element, to request the ADRF network element to subscribe to data or analytics to be stored, and the ADRF network element subscribes to an NWDAF network element or a data collection control function (data collection control function, DCCF) network element to obtain the data or analytics. The analytics or data can be provided as notifications via a DCCF data management (Ndccf_DataManagement) service, an NWDAF data management (Nnwdaf_DataManagement) service, or a messaging framework adaptor function (the messaging framework adaptor function, MFAF) data management (Nmfaf_3caDataManagement) service.

The network repository function (network repository function, NRF) network element may provide registration and discovery functions, so that network functions (network functions, NFs) may discover each other and communicate with each other through an application programming interface (application programming interface, API).

The technical solutions provided in this application may be applied to various communication systems in which virtualized network functions are deployed, for example, a 5th generation (5th generation, 5G) communication system or a new radio (new radio, NR) system, a long term evolution (long term evolution, LTE) network with a network functions virtualization infrastructure (network functions virtualization infrastructure, NFVI) or having other virtualized network functions, a MulteFire network (a new wireless network is created by using LTE technologies independently run on an unlicensed spectrum (for example, a global 5 GHz unlicensed spectrum)), a home base station network, a mobile network accessed through wireless fidelity (wireless fidelity, Wi-Fi), a wideband code division multiple access (wideband code division multiple access, WCDMA) network, a fixed-mobile convergence network (a fixed access network accesses a mobile network), and another future communication system like a 6th generation mobile communication system.

For example, the technical solutions provided in this application may be applied to a 5G system architecture defined in the 3rd Generation Partnership Project Technical Specification (3rd generation partnership project technical specification, 3GPP TS) 23.288.

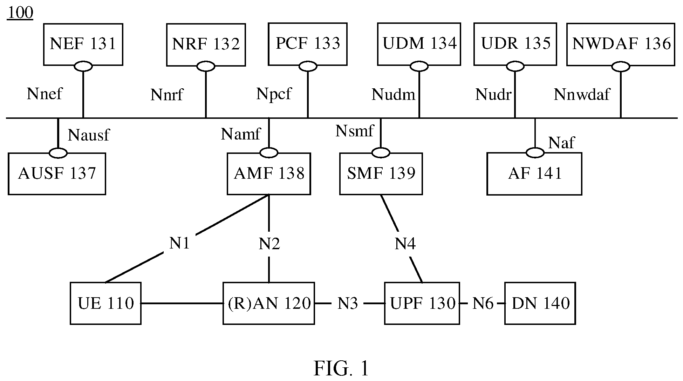

FIG. 1 is a diagram of a system architecture according to an embodiment of this application. As shown in FIG. 1, the system architecture 100 includes but is not limited to an access network, a core network, a data network (data network, DN) 140, and an application function (application function, AF) 141. The access network may be configured to implement a function related to radio access, and may include a radio access network (radio access network, RAN) 120 and user equipment (user equipment, UE) 110. The core network may include but is not limited to the following logical functions: a user plane function (user plane function, UPF) 130, a network exposure function (network exposure function, NEF) 131, a network repository function (network repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, a session management function (session management function, SMF) 139, or the like. It may be understood that "Nnef', "Nnrf", "Npcf", "Nudm", "Nudr", "Nnwdaf", "Naf", "Nausf", "Namf", and "Nsmf' in FIG. 1 represent names of the service-based interfaces. For details, refer to related descriptions in a 3GPP standard protocol. Details are not described herein.

Optionally, the UE may access the data network by establishing a session, namely, a protocol data unit (protocol data unit, PDU) session (PDU session), from the UE to the RAN, then to the UPF, and to the data network (data network, DN).

The UE may be a terminal device, for example, a mobile phone, an internet of things terminal device, a smart terminal, a vehicle-mounted terminal, a vehicle-mounted device, a wearable device, a multimedia device, or a streaming media device. The RAN is configured to provide wireless access for the terminal device, and includes but is not limited to a 5G base station (Next-Generation NodeB, gNB), a wireless base station (evolved NodeB, eNodeB or eNB) in an LTE network, a wireless access point (wireless fidelity access point, Wi-Fi AP), a worldwide interoperability for microwave access base station (worldwide interoperability for microwave access base station, WiMAX BS), a relay station, and the like. In a 5G RAN architecture, the gNB may include a central unit (central unit, CU) and a distributed unit (distributed unit, DU). The gNB may further include a radio frequency unit (radio unit, RU). The CU and the DU may be understood as division of the base station from a perspective of logical functions. The CU and the DU may be physically separated or may be deployed together. For example, a plurality of DUs may share one CU, or one DU may be connected to a plurality of CUs, and the CU and the DU may be connected through an F1 interface.

The AMF is mainly responsible for mobility management in a mobile network, for example, user location update, registration of a user with a network, and user switching. The SMF is mainly responsible for session management in the mobile network, for example, session establishment, modification, and release. A specific function is, for example, allocating an internet protocol (internet protocol, IP) address to a user, or selecting a UPF that provides a packet forwarding function. The PCF is responsible for providing policies such as a quality of service (quality of service, QoS) policy and a slice selection policy for the AMF and the SMF. The UDM may be configured to store subscriber data such as subscription information and authentication or authorization information. The UPF is mainly responsible for processing a user packet, for example, forwarding and charging the user packet.

It may be understood that, for each network function shown in FIG. 1, refer to a related protocol, standard, or the like. Details are not described in this application. It should be further understood that N1, N2, N3, N4, N6, and the like shown in FIG. 1 are all interface sequence numbers. For example, for meanings of the interface sequence numbers, refer to meanings defined in the 3GPP standard protocol. The meanings of the interface sequence numbers are not limited in this application.

A detailed procedure for secured and authorized AI/ML model sharing between different vendors (The detailed procedure for secured and authorized AI/ML model sharing between different vendors) is briefly described below for better understanding of the technical solutions in embodiments of this application.

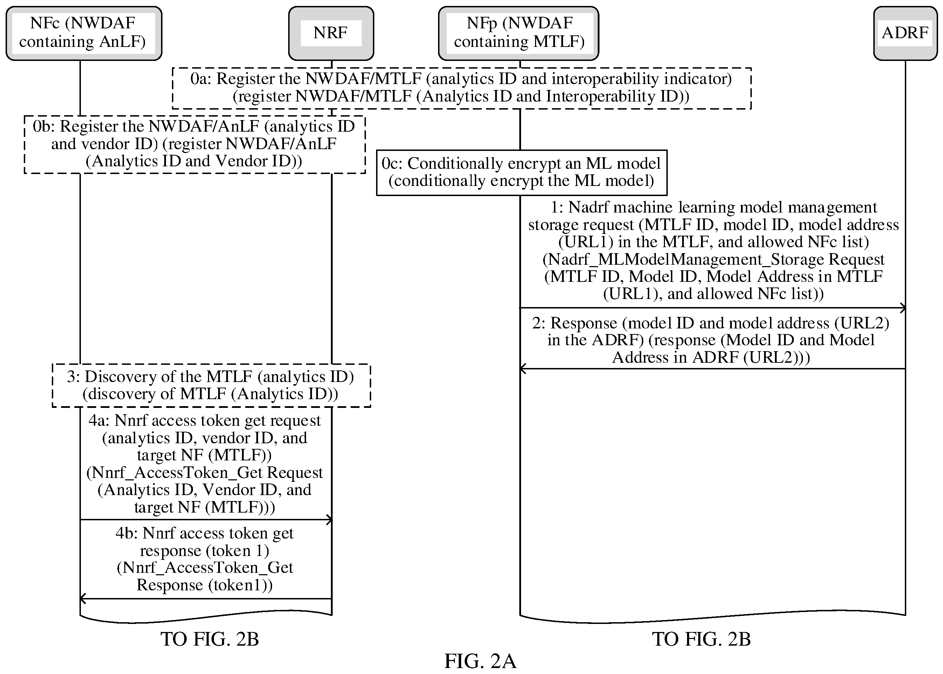

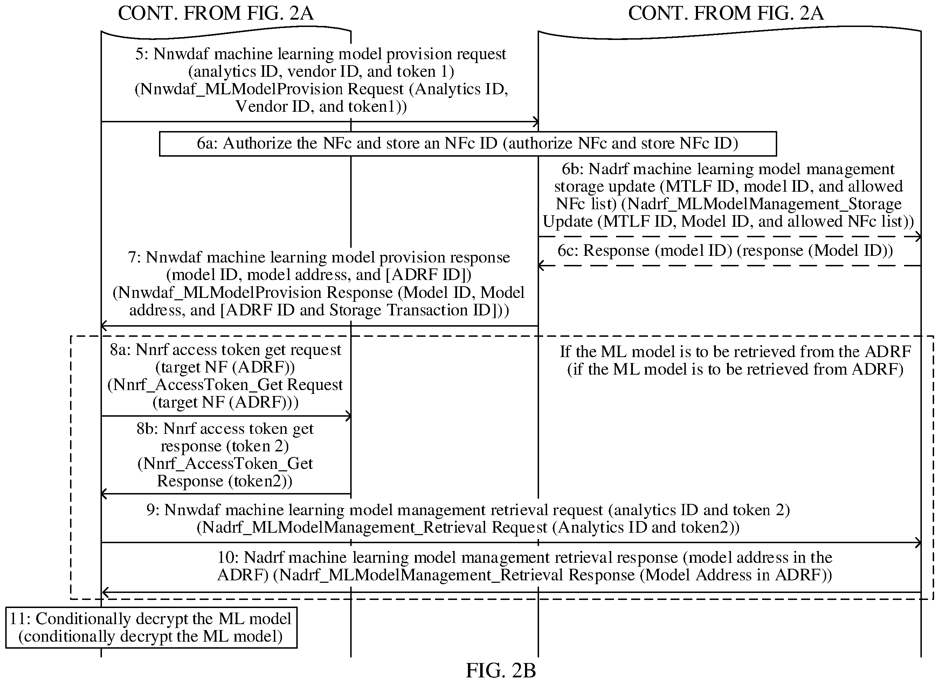

FIG. 2A and FIG. 2B are a schematic flowchart of secured and authorized AI/ML model sharing according to an embodiment of this application. As shown in FIG. 2A and FIG. 2B, a procedure for secured and authorized AI/ML model sharing between different vendors includes but is not limited to the following steps.

Step 0a: Register an NWDAF containing MTLF. To be specific, the NWDAF containing MTLF registers the NWDAF containing MTLF with an NRF. Specifically, the NWDAF containing MTLF sends an analytics ID (Analytics ID) and an interoperability indicator (interoperability indicator) to the NRF. The interoperability indicator is specifically a model interoperability indicator (for example, an ML model interoperability indicator (ML Model interoperability indicator)). An NF service producer (NF Service producer, NFp), namely, the NWDAF containing MTLF, registers a network function (NF) profile in the NRF network element with the interoperability indicator per analytics ID. The interoperability indicator may indicate a list of NWDAF providers (or vendors (vendors)) that are allowed to retrieve ML models from the NWDAF containing MTLF.

Step 0b: Register an NWDAF containing AnLF. To be specific, the NWDAF containing AnLF registers the NWDAF containing AnLF with the NRF. Specifically, the NWDAF containing AnLF sends the analytics ID and a vendor ID of the AnLF to the NRF.

Step 0c: Conditionally encrypt the ML model. The model is stored in an encrypted format unless an AI/ML model generator (the NWDAF containing AnLF) and a storage platform (an ADRF) are a part of a same system and belong to the same vendor and operator security domain.

Step 1: The NWDAF containing MTLF sends a model storage request (for example, Nadrf_MLModelManagement_StorageRequest) to the ADRF. The model storage request includes one or more of the following: an ID of the NWDAF containing MTLF, a model ID, a model address in the NWDAF containing MTLF (for example, a uniform resource locator 1 (uniform resource locator 1, URL1)), or an allowed NFc list (allowed NFc list). The allowed NFc list indicates that a list of network function instance identifiers (NF instance IDs) that are allowed to obtain/retrieve/access/query the model.

Step 2: The ADRF sends a response to the NWDAF containing MTLF. The response includes the model ID and a model address (for example, a URL2) in the ADRF.

Step 3: Discovery of the NWDAF containing MTLF. An NF service consumer (NFc), for example, the NWDAF containing AnLF, sends a network element discovery request (for example, an Nnrf_NFDiscovery_Request) to the NRF, to select a suitable NF service producer (NFp), for example, the NWDAF containing MTLF. The network element discovery request includes the analytics ID.

Step 4a: The NF service consumer (NFc), for example, the NWDAF containing AnLF, sends a token get request (for example, an Nnrf_AccessToken _AccessToken_Get request) to the NRF, to request an access token from the NRF. The token get request contains but is not limited to the vendor ID of the NWDAF containing AnLF and/or the analytics ID.

Step 4b: The NRF checks whether the NWDAF containing AnLF is authorized to access a requested service in the NWDAF containing MTLF, verifies whether the vendor ID of the NF service consumer (NFc) is included in the interoperability indicator of the NWADF containing MTLF for the analytics ID, and sends a token 1 (token 1) based on the vendor ID provided by the NF service consumer (NFc) during registration.

Step 5: The NF service consumer (NFc) sends a model provision request (for example, an Nnwdaf_MLModelProvision request) to the NWDAF containing MTLF, to retrieve an ML model corresponding to the analytics ID. The model provision request includes one or more of the following: the analytics ID, the vendor ID, or the token 1.

Step 6a: The NFp (for example, the NWDAF containing MTLF) authorizes the NFc and stores an NFc ID. The NWDAF containing MTLF performs identity authentication on the NF service consumer (NFc), verifies the access token 1, and ensures that the analytics ID is included in the access token 1. If the verification is successful, the NWDAF containing MTLF determines a to-be-shared ML model for the requested analytics ID, and stores an NF instance ID (NF instance ID) of the NWDAF containing AnLF as a part of an allowed NFc list corresponding to the ML model.

Step 6b: If the ML model that is determined to be shared is stored in the ADRF, and the NF service consumer (NFc) is not yet in the allowed NFc list stored in the ADRF, the NWDAF containing MTLF sends a model storage update message (for example, an Nadrf_MLModelManagement_StorageRequest) to the ADRF, to trigger an update at the ADRF. The model storage update message includes one or more of the following: the ID of the NWDAF containing MTLF, the model ID, or the allowed NFc list. Then, the ADRF stores the allowed NFc list for the ML model corresponding to the model ID.

Step 6c: The ADRF sends a response to the NWDAF containing MTLF, where the response includes the model ID.

Step 7: The NWDAF containing MTLF sends a model provision response (for example, an Nnwdaf_MLModelProvision Response) to the NF service consumer (NFc). The model provision response includes the model ID and/or an address of the ML model that is determined to be shared. The address may be an address (namely, the URL1) of the ML model stored in the NWDAF containing MTLF, or the address may be an address (namely, the URL2) of the ML model stored in the ADRF. If the model is stored in the ADRF, this message may further include an ADRF ID.

Step 8a: The NF service consumer (NFc) requests an access token from the NRF, to authorize the NFc to retrieve a model stored in the ADRF.

Step 8b: The NRF verifies whether the NF service consumer (NFc), for example, the NWDAF containing AnLF, is authorized to access the model provided by the ADRF. If the verification is successful, the NRF sends a token 2 (token 2) based on information provided in an NF profile of the ADRF.

Step 9: The NF service consumer (NFc), for example, the NWDAF containing AnLF, retrieves a target model by sending a model retrieval/obtaining request (for example, an Nadrf_MLModelManagement_Retrieval Request). The model retrieval/obtaining request includes the analytics ID and/or the token 2.

Step 10: The ADRF performs identity authentication on the NF service consumer (NFc), and verifies the access token (token 2). The ADRF further verifies whether an NF ID of the NF service consumer (NFc) is included in the allowed NFc list for the ML model. If the verification succeeds, the ADRF sends a model retrieval/obtaining response (for example, Nadrf_MLModelManagement_Retrieval Response) to the NF service consumer (NFc). The model retrieval/obtaining response includes the address of the model stored in the ADRF.

Step 11: Conditionally decrypt the ML model. The NF service consumer (NFc) retrieves the ML model from the ADRF, and decrypts the model based on an implementation of the vendor.

It may be understood that, in this application, a full name of the "interoperability indicator" is an ML model interoperability indicator (ML Model interoperability indicator), and for brevity, the "interoperability indicator" is referred to as an interoperability indicator.

It can be learned from FIG. 2A and FIG. 2B that, in the AI/ML model sharing procedure shown in FIG. 2A and FIG. 2B, only a case in which the NF service consumer directly obtains/retrieves the model from the model provider (for example, the NWDAF containing MTLF) is considered. However, in a delegated model acquisition scenario, how to authorize a consumer is a problem worth considering. Currently, in the delegated model acquisition scenario, a model provider or a model producer cannot verify whether a model consumer has permission to obtain a model requested by the model consumer.

In view of this, embodiments of this application provide a model authorization method, an apparatus, and a readable storage medium, to help implement model acquisition in delegated model acquisition scenarios, and improve security of a model in the delegated model acquisition scenarios.

In a possible implementation, the "delegated model acquisition scenario" mentioned in this application may be understood as that a network element A requests a model from a network element C for (or on behalf of) a network element B. For example, in some scenarios, a first NWDAF network element containing MTLF may not be able to generate a model that meets a requirement of a consumer (for example, an NWDAF containing AnLF), and the consumer cannot directly request the model from a provider of the model. In this case, the first NWDAF network element containing MTLF may request the model from the provider of the model (for example, a second NWDAF network element containing MTLF) for the consumer. Alternatively, if training of an ML model is triggered by a request of the NWDAF containing AnLF, the NWDAF containing MTLF determines that a federated learning (federated learning, FL) mechanism is needed, but the NWDAF containing MTLF cannot act as an FL server. In this case, the NWDAF containing MTLF may discover an FL server NWDAF, and request the FL server NWDAF to provide a trained ML model. A subscription endpoint address of the NWDAF containing AnLF is provided in a request message sent to the FL server NWDAF. The FL server NWDAF may determine to start an FL process before providing the ML model. After training of the ML model succeeds, the FL server NWDAF sends ML model information to a notification endpoint (for example, the NWDAF containing AnLF). For another example, in a process of analytics subscription transfer or analytics context transfer, a source NWDAF network element containing AnLF may request, for a target NWDAF network element containing AnLF, to obtain a transferred model from the model provider (for example, the NWDAF containing MTLF).

The following describes in detail the technical solutions provided in this application with reference to more accompanying drawings.

The technical solutions provided in this application are described by using a plurality of embodiments. For details, refer to descriptions of the following embodiments. Mutual reference may be made between same or similar parts in embodiments or implementations. In embodiments of this application and implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

In embodiments of this application, that "a network element A sends information A to a network element B" may be understood as that a destination end of the information A or an intermediate network element on a transmission path between the network element A and the destination end is the network element B, and may include directly or indirectly sending the information to the network element B; and "the network element B receives the information A from the network element A" may be understood as that a source end of the information A or an intermediate network element on a transmission path to the source end is the network element A, and may include directly or indirectly receiving the information from the network element A. Necessary processing, for example, a format change, may be performed on the information between the source end and the destination end between which the information is sent, but the destination end can understand valid information from the source end. Similar descriptions in this application may be understood similarly, and details are not described herein.

It should be understood that, in this application, the indication includes a direct indication (also referred to as an explicit indication) and an implicit indication. The directly indicating the information A means including the information A. The implicitly indicating the information A means indicating the information A by directly indicating the information B and based on a correspondence between the information A and information B. The correspondence between the information A and the information B may be predefined, prestored, pre-burned, or preconfigured.

It should be understood that, in this application, that information D is determined based on information C includes both that the information D is determined based only on the information C and that the information D is determined based on the information C and other information. In addition, that the information C is used to determine the information D may further include an indirect determining case. For example, the information D is determined based on information E, and the information E is determined based on the information C.

It may be understood that the NWDAF containing AnLF may request the NWDAF containing MTLF to train a model that meets a function for the NWDAF containing AnLF. This function may be represented by using an "analytics ID". In other words, the NWDAF containing AnLF may send a model training request to the NWDAF containing MTLF, where the model training request includes the analytics ID. The NWDAF containing MTLF trains the model corresponding to the analytics ID. Therefore, there is a correspondence between the analytics ID and the model, and the analytics ID and the model may be associated based on a function of the model.

The following describes each embodiment in detail.

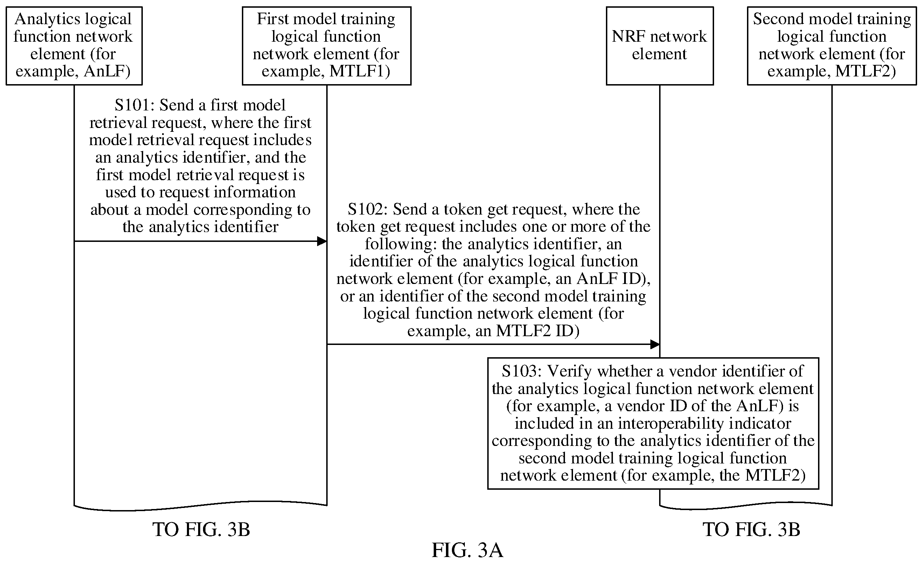

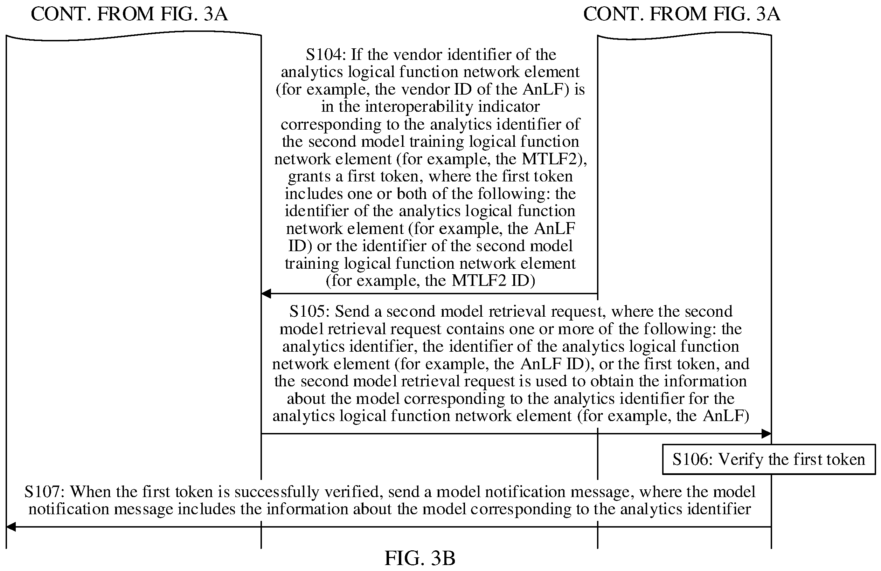

FIG. 3A and FIG. 3B are a schematic flowchart of a model authorization method according to an embodiment of this application. In this method, a first model training logical function network element may be a first network element having a model training logical function, for example, a first NWDAF network element containing MTLF (an NWDAF 1 containing MTLF), which may be referred to as an MTLF1 for short. A second model training logical function network element may be a second network element having a model training logical function, for example, a second NWDAF network element containing MTLF (an NWDAF2 containing MTLF), which may be referred to as an MTLF2 for short. An analytics logical function network element may be a network element having an analytics logical function, for example, an NWDAF network element containing AnLF (an NWDAF containing AnLF), which may be referred to as an AnLF for short. This method mainly describes that the MTLF1 requests a model from the MTLF2 for the AnLF.

As shown in FIG. 3A and FIG. 3B, the model authorization method includes but is not limited to the following steps.

S101: The analytics logical function network element (for example, the AnLF) sends a first model retrieval request to the first model training logical function network element (for example, the MTLF1), where the first model retrieval request includes an analytics identifier, and the first model retrieval request is used to request information about a model corresponding to the analytics identifier.

Correspondingly, the first model training logical function network element (for example, the MTLF1) receives the first model retrieval request.

S102: The first model training logical function network element (for example, the MTLF1) sends a token get request to an NRF network element, where the token get request contains one or more of the following: the analytics identifier, an identifier of the analytics logical function network element (for example, an AnLF ID), or an identifier of the second model training logical function network element (for example, an MTLF2 ID). The second model training logical function network element (for example, the MTLF2) may be configured to train and/or provide the information about the model corresponding to the analytics identifier.

Correspondingly, the NRF network element receives the token get request.

In a possible implementation, the first model retrieval request may include but is not limited to the analytics identifier (analytics ID), an address (for example, a URL or a fully qualified domain name (fully qualified domain name, FQDN)) of the analytics logical function network element (for example, the AnLF), and/or a token 1. The first model retrieval request may be used to request the information about the model corresponding to the analytics ID. For example, the address of the analytics logical function network element (for example, the AnLF) may be carried via a subscription endpoint address (subscription endpoint address). The subscription endpoint address may indicate an address for receiving a model notification message. The token 1 may be used by the first model training logical function network element (for example, the MTLF1) to verify an identity of the analytics logical function network element (for example, the AnLF). If the verification for the token 1 is successful, the first model training logical function network element (for example, the MTLF1) may determine a to-be-shared model for the requested analytics ID. For a method for obtaining and using the token 1, refer to the related steps in FIG. 2A and FIG. 2B. Details are not described herein again.

In a possible implementation, after receiving the first model retrieval request, the first model training logical function network element (for example, the MTLF1) determines that the second model training logical function network element produces/trains/provides a corresponding model for the analytics logical function network element. Specifically, for example, the first model training logical function network element finds, according to a local policy, that the first model training logical function network element cannot generate the model corresponding to the analytics ID, and searches for another model training logical function network element (an MTLF) to provide the model for the analytics logical function network element (for example, the AnLF). For example, the first model training logical function network element (for example, the MTLF 1) may obtain a candidate network element list from the NRF network element through a network element discovery procedure. The candidate network element list may include one or more model training logical function network elements (MTLFs). The first model training logical function network element (for example, the MTLF1) may select a model training logical function network element (an MTLF) from the candidate network element list, to provide the model corresponding to the analytics ID for the analytics logical function network element (for example, the AnLF). For ease of description, the model training logical function network element (the MTLF) selected from the candidate network element list is denoted as the second model training logical function network element (for example, the MTLF2). In other words, the second model training logical function network element (for example, the MTLF2) may produce/train/provide the information about the model corresponding to the analytics ID for the analytics logical function network element (for example, the AnLF).

Further, the first model training logical function network element (for example, the MTLF 1) may send the token get request to the NRF network element. The token get request may include but is not limited to the analytics ID, the identifier of the analytics logical function network element (for example, the AnLF ID), the identifier of the second model training logical function network element (for example, the MTLF2 ID), and/or the like. The analytics ID may be an identifier of an analytics service corresponding to a model for which authorization is requested. For example, the token get request may be used to request a first token (a token 2). In other words, the token get request may be used to request (the NRF network element) to authorize the analytics logical function network element (for example, the AnLF) to obtain the model corresponding to the analytics ID from the second model training logical function network element (for example, the MTLF2). In other words, the token get request may be used by the first model training logical function network element (for example, the MTLF1) to request, for (or on behalf of (behalf)) the analytics logical function network element (for example, the AnLF), the first token for obtaining the model corresponding to the analytics ID.

In a possible implementation, the token get request may further include one or more of the following: an identifier of the first model training logical function network element (for example, an MTLF1 ID), a vendor identifier of the analytics logical function network element (for example, a vendor ID of the AnLF), or first indication information. The vendor identifier of the analytics logical function network element (for example, the vendor ID of the AnLF) may be used by the NRF network element to verify whether the analytics logical function network element can be authorized to obtain the model corresponding to the analytics ID from the second model training logical function network element (for example, the MTLF2). For a specific verification manner, refer to the following descriptions. The first indication information may indicate that the first model training logical function network element (for example, the MTLF 1) requests the first token for (or on behalf of (behalf)) the analytics logical function network element (for example, the AnLF). In other words, the first indication information may indicate that the NRF network element is to be requested to authorize the analytics logical function network element (for example, the AnLF) to obtain the model in the second model training logical function network element (for example, the MTLF2). Alternatively, the first indication information may indicate that the token get request is an access token get request (an Nnrf_AccessToken _AccessToken_Get request) in a delegated model acquisition scenario.

It may be understood that the model in this application may be an ML model, or may be an AI model. This is not limited.

It may be understood that the ID of each type of network element mentioned in this application may be a network function instance identifier (NF instance ID). Details are not described below. The NF instance ID may uniquely identify a network function instance (NF Instance ID: Unique identity of the NF Instance).

In a possible implementation, before step S101, the model authorization method further includes: The analytics logical function network element (for example, the AnLF), the first model training logical function network element (for example, the MTLF1), and the second model training logical function network element (for example, the MTLF2) each send a registration request message to the NRF network element. For example, the first model training logical function network element (for example, the MTLF1) and the second model training logical function network element (for example, the MTLF2) register respective analytics IDs and interoperability indicators with the NRF network element. For a specific registration process, refer to step 0a in FIG. 2A. Details are not described herein again. The analytics logical function network element (for example, the AnLF) registers its analytics ID and vendor ID with the NRF network element. For a specific registration process, refer to step 0b in FIG. 2A. Details are not described herein again. The interoperability indicator may indicate a list of NWDAF providers (or vendors (vendors)) that are allowed to retrieve ML models from an NWDAF containing MTLF.

In a possible implementation, a manner in which the first model training logical function network element (for example, the MTLF1) obtains the candidate network element list may include: The first model training logical function network element (for example, the MTLF1) sends a network element discovery request to the NRF network element. The network element discovery request includes one or more of the following: the analytics ID, the identifier of the analytics logical function network element (for example, the AnLF ID), and/or the vendor identifier of the analytics logical function network element (for example, the vendor ID of the AnLF). After receiving the network element discovery request, the NRF network element may obtain the vendor identifier of the analytics logical function network element (for example, the vendor ID of the AnLF) based on the network element discovery request, and may determine the candidate network element list based on a locally stored NF profile of each network element. For example, if the network element discovery request includes the identifier of the analytics logical function network element (for example, the AnLF ID), the NRF network element may determine, in a plurality of locally stored NF profiles, an NF profile 1 corresponding to the identifier of the analytics logical function network element (for example, the AnLF ID), and may obtain the vendor identifier of the analytics logical function network element (for example, the vendor ID of the AnLF) from the NF profile 1. It may be understood that if the network element discovery request includes the vendor identifier of the analytics logical function network element (for example, the vendor ID of the AnLF), the NRF network element may obtain the vendor identifier of the analytics logical function network element (for example, the vendor ID of the AnLF) from the network element discovery request, and does not need to search the locally stored NF profile. After obtaining the vendor identifier of the analytics logical function network element (for example, the vendor ID of the AnLF), the NRF network element may determine, in locally stored NF profiles of a plurality of model producers (namely, NWDAFs containing MTLF), an NF profile of a model producer (namely, an NWDAF containing MTLF) in which an interoperability indicator corresponding to the analytics ID includes the vendor identifier of the analytics logical function network element (for example, the vendor ID of the AnLF). These model producers (the NWDAFs containing MTLF) are a list of candidate network elements. In other words, the interoperability indicator corresponding to the analytics ID of each model training logical function network element (for example, the MTLF) in the candidate network element list includes the vendor identifier of the analytics logical function network element (for example, the vendor ID of the AnLF). The NRF network element may send a network element discovery response to the first model training logical function network element (for example, the MTLF1). The network element discovery response includes the candidate network element list.

S103: The NRF network element verifies whether the vendor identifier of the analytics logical function network element (for example, the vendor ID of the AnLF) is included in the interoperability indicator corresponding to the analytics identifier of the second model training logical function network element (for example, the MTLF2).

S104: If the vendor identifier of the analytics logical function network element (for example, the vendor ID of the AnLF) is in the interoperability indicator corresponding to the analytics identifier of the second model training logical function network element (for example, the MTLF2), the NRF network element sends the first token to the first model training logical function network element (for example, the MTLF1), where the first token includes one or both of the following: the identifier of the analytics logical function network element (for example, the AnLF ID) or the identifier of the second model training logical function network element (for example, the MTLF2 ID).

Correspondingly, the first model training logical function network element (for example, the MTLF1) receives the first token.

In a possible implementation, after receiving the token get request, the NRF network element may verify whether the vendor identifier of the analytics logical function network element (for example, the vendor ID of the AnLF) is included in the interoperability indicator corresponding to the analytics identifier of the second model training logical function network element (for example, the MTLF2). In other words, after receiving the token get request, the NRF network element may verify whether the analytics logical function network element (for example, the AnLF) has permission to obtain the model from the second model training logical function network element (for example, the MTLF2). For example, the token get request contains one or more of the following: the analytics ID, the identifier of the analytics logical function network element (for example, the AnLF ID), or the identifier of the second model training logical function network element (for example, the MTLF2 ID). The NRF network element may determine, in the plurality of locally stored NF profiles, the NF profile 1 corresponding to the identifier of the analytics logical function network element (for example, the AnLF ID), and may obtain the vendor identifier of the analytics logical function network element (for example, the vendor ID of the AnLF) from the NF profile 1. It may be understood that when the token get request contains the vendor identifier of the analytics logical function network element (for example, the vendor ID of the AnLF), the NRF network element may obtain the vendor identifier of the analytics logical function network element (for example, the vendor ID of the AnLF) from the token get request, and does not need to search the locally stored NF profile. The NRF network element may further determine, in the plurality of locally stored NF profiles, an NF profile 2 corresponding to the identifier of the second model training logical function network element (for example, the MTLF2 ID), and may obtain, from the NF profile 2, an interoperability indicator corresponding to the analytics ID (which means the analytics ID carried in the token get request herein).

Then, the NRF network element may verify whether the interoperability indicator corresponding to the analytics ID includes the vendor identifier of the analytics logical function network element (for example, the vendor ID of the AnLF). If the interoperability indicator corresponding to the analytics ID in the NF profile 2 includes the vendor identifier of the analytics logical function network element (for example, the vendor ID of the AnLF), it indicates that the analytics logical function network element (for example, the AnLF) has the permission to obtain the model from the second model training logical function network element (for example, the MTLF2). In this case, the NRF network element may generate an authorization token (namely, the first token, the token 2) of the model, and may send the first token (the token 2) to the first model training logical function network element (for example, the MTLF1). The first token (the token 2) may include a part or all of content of the token get request. For example, the first token may include but is not limited to one or more of the following: the analytics ID, the identifier of the analytics logical function network element (for example, the AnLF ID), or the identifier of the second model training logical function network element (for example, the MTLF2 ID). The first token may indicate that the analytics logical function network element (for example, the AnLF) is authorized to obtain the information about the model corresponding to the analytics ID from the second model training logical function network element (for example, the MTLF2). Alternatively, the first token may indicate that the first model training logical function network element (for example, the MTLF1) is authorized to obtain, for (or on behalf of (behalf)) the analytics logical function network element (for example, the AnLF), the information about the model corresponding to the analytics ID from the second model training logical function network element (for example, the MTLF2). It may be understood that authorization information of the NRF network element is per each analytics ID (Per Analytics ID), or the first token uniquely corresponds to the analytics ID in the token get request. For different analytics IDs, the NRF network element may have different authorization information, for example, tokens. The tokens may be in one-to-one correspondence with the analytics IDs.

In a possible implementation, if the token get request further contains the identifier of the first model training logical function network element (for example, the MTLF1 ID) and the vendor identifier of the analytics logical function network element (for example, the vendor ID of the AnLF), correspondingly, the first token (the token 2) may also include the identifier of the first model training logical function network element (for example, the MTLF1 ID) and the vendor identifier of the analytics logical function network element (for example, the vendor ID of the AnLF). For example, the first token may further include second indication information. The second indication information may indicate that the analytics logical function network element (for example, the AnLF) is authorized to obtain the information about the model corresponding to the analytics ID from the second model training logical function network element (for example, the MTLF2). Alternatively, the second indication information may indicate that the first model training logical function network element (for example, the MTLF1) is authorized to obtain, for (or on behalf of (behalf)) the analytics logical function network element (for example, the AnLF), the information about the model corresponding to the analytics ID from the second model training logical function network element (for example, the MTLF2). Alternatively, the second indication information may indicate that the first token is an authorization token in the delegated model acquisition scenario.

In a possible implementation, if the interoperability indicator corresponding to the analytics ID in the NF profile 2 does not include the vendor identifier of the analytics logical function network element (for example, the vendor ID of the AnLF), it indicates that the analytics logical function network element (for example, the AnLF) has no permission to obtain the model from the second model training logical function network element (for example, the MTLF2). The NRF network element may send a response message to the first model training logical function network element (for example, the MTLF1), to reject the token get request. The response message may carry a rejection reason, for example, the analytics logical function network element (for example, the AnLF) cannot obtain the model from the second model training logical function network element (for example, the MTLF2), or the vendor identifier of the analytics logical function network element (for example, the vendor ID of the AnLF) is not included in the interoperability indicator of the second model training logical function network element (for example, the MTLF2).

In a possible implementation, when the token get request contains the first indication information, after receiving the token get request, the NRF network element may determine, based on the first indication information, that the token get request is that the first model training logical function network element (for example, the MTLF1) requests the NRF network element to authorize the analytics logical function network element (for example, the AnLF) to obtain the model of the second model training logical function network element (for example, the MTLF2). Then, the verification in step S103 is performed.

S105: The first model training logical function network element (for example, the MTLF1) sends a second model retrieval request to the second model training logical function network element (for example, the MTLF2), where the second model retrieval request includes one or more of the following: the analytics identifier, the identifier of the analytics logical function network element (for example, the AnLF ID), or the first token, and the second model retrieval request is used to obtain the information about the model corresponding to the analytics identifier for the analytics logical function network element (for example, the AnLF). The first token may be used to verify the second model retrieval request.

Correspondingly, the second model training logical function network element (for example, the MTLF2) receives the second model retrieval request.

S106: The second model training logical function network element (for example, the MTLF2) verifies the first token.

S107: When the first token is successfully verified, the second model training logical function network element (for example, the MTLF2) sends a model notification message to the analytics logical function network element (for example, the AnLF), where the model notification message includes the information about the model corresponding to the analytics identifier.

Correspondingly, the analytics logical function network element (for example, AnLF) receives the model notification message.

In a possible implementation, after receiving the first token (the token 2), the first model training logical function network element (for example, the MTLF1) may send the second model retrieval request to the second model training logical function network element (for example, the MTLF2). The second model retrieval request may be used to obtain the information about the model corresponding to the analytics ID for the analytics logical function network element (for example, the AnLF). The second model retrieval request may include but is not limited to one or more of the following: the analytics ID (which means the analytics ID carried in the token get request, and is also the analytics ID carried in the first model retrieval request), the identifier of the analytics logical function network element (for example, the AnLF ID), or the first token (the token 2). The first token may be used to verify the second model retrieval request, or the first token may be used to check various identifiers in the second model retrieval request. Alternatively, the first token may be used to check the permission of the analytics logical function network element (for example, the AnLF) to obtain a model (the model may be the model corresponding to the analytics ID) from the second model training logical function network element (for example, the MTLF2). Alternatively, the first token may be used to check permission of the first model training logical function network element (for example, the MTLF 1) to obtain, for (or on behalf of (behalf)) the analytics logical function network element (for example, the AnLF), a model (the model may be the model corresponding to the analytics ID) from the second model training logical function network element (for example, the MTLF2).

In a possible implementation, after receiving the second model retrieval request, the second model training logical function network element (for example, the MTLF2) may verify the first token (the token 2). For example, the second model training logical function network element (for example, the MTLF2) may verify whether the analytics ID in the second model retrieval request is consistent with (or identical or matches) the analytics ID in the first token (the token 2), and whether the identifier of the analytics logical function network element (for example, the AnLF ID) in the second model retrieval request is consistent with (or the same as or matches) the identifier of the analytics logical function network element (for example, the AnLF ID) in the first token (the token 2). If the analytics IDs are consistent (or the same) and the identifiers are consistent (or the same), it may indicate that the first token (the token 2) is successfully verified. Herein, the matching may be explained as follows: The analytics ID(s) in the second model retrieval request are contained in the analytics ID(s) included in the first token.

In a possible implementation, the second model retrieval request further contains one or more of the following: the identifier of the first model training logical function network element (for example, the MTLF1 ID), the address (for example, the URL or the FQDN) of the analytics logical function network element (for example, the AnLF), the vendor identifier of the analytics logical function network element (for example, the vendor ID of the AnLF), or third indication information. For example, the address of the analytics logical function network element (for example, the AnLF) may be carried via the subscription endpoint address. The subscription endpoint address may indicate the address for receiving the model notification message. The third indication information may indicate that the first model training logical function network element (for example, the MTLF1) obtains, for (or on behalf of (behalf)) the analytics logical function network element (for example, the AnLF), the information about the model corresponding to the analytics ID. Alternatively, the third indication information may indicate that the second model retrieval request is an ML model provision request (Nnwdaf_MLModelProvision request) in the delegated model acquisition scenario.

Correspondingly, after receiving the second model retrieval request, when verifying the first token, in addition to verifying whether the analytics ID and the identifier of the analytics logical function network element (for example, the AnLF ID) in the second model retrieval request are consistent with (or the same as) the analytics ID and the identifier of the analytics logical function network element (for example, the AnLF ID) in the first token (the token 2), the second model training logical function network element (for example, the MTLF2) may further verify one or both of the following: whether the identifier of the first model training logical function network element (for example, the MTLF1 ID) in the second model retrieval request is consistent with (or the same as) the identifier of the first model training logical function network element (for example, the MTLF1 ID) in the first token (the token 2), and whether the vendor identifier of the analytics logical function network element (for example, the vendor ID of the AnLF) in the second model retrieval request is consistent with (or the same as) the vendor identifier of the analytics logical function network element (for example, the vendor ID of the AnLF) in the first token (the token 2). The second model training logical function network element (for example, the MTLF2) may further determine whether the vendor identifier of the analytics logical function network element (for example, the vendor ID of the AnLF) in the second model retrieval request is included in the interoperability indicator corresponding to the analytics ID of the second model training logical function network element (for example, the MTLF2). If the analytics IDs are consistent (or the same) and the identifiers are consistent (or the same), and the vendor identifier of the analytics logical function network element (for example, the vendor ID of the AnLF) is included in the interoperability indicator corresponding to the analytics identifier of the second model training logical function network element (for example, the MTLF2), it may indicate that the first token (the token 2) is successfully verified.

In a possible implementation, when the first token is successfully verified, the second model training logical function network element (for example, the MTLF2) may send the model notification message to the analytics logical function network element (for example, the AnLF). It may be understood that the second model training logical function network element (for example, the MTLF2) may directly send the model notification message to the analytics logical function network element (for example, the AnLF), or may forward the model notification message via an intermediate network element. This is not limited in this embodiment of this application. For example, the second model training logical function network element (for example, the MTLF2) may send the model notification message to the analytics logical function network element (for example, the AnLF) via the first model training logical function network element (for example, the MTLF1). For example, the second model training logical function network element (for example, the MTLF2) sends the model notification message to the first model training logical function network element (for example, the MTLF1), and the first model training logical function network element (for example, the MTLF1) may forward the model notification message to the analytics logical function network element (for example, the AnLF). The forwarding herein may be transparent transmission, or may be forwarding after the model notification message is processed. This is not limited in this embodiment of this application. However, the model notification message received by the analytics logical function network element (for example, the AnLF) may include the information about the model corresponding to the analytics ID. For example, the model notification message may further include an identifier of an ADRF network element (for example, an ADRF ID) that stores the model. After receiving the model notification message, the analytics logical function network element (for example, the AnLF) may obtain (or download) a model file of the model based on the model notification message, and locally store the model file.

In this application, the "information about the model" may include but is not limited to one or more of the following: a model identifier (a model ID), an address of the model in the second model training logical function network element (for example, the MTLF2), the model file, or the like.

The model ID mentioned in this application may uniquely identify a model (ML Model identifier: unique ML Model identifier). The address of the model in the second model training logical function network element (for example, the MTLF2) may be used by the analytics logical function network element (for example, the AnLF) to obtain (for example, download) the model file from the second model training logical function network element (for example, the MTLF2) based on the address, and locally store the model file.

In a possible implementation, when the first token is successfully verified, the second model training logical function network element (for example, the MTLF2) may further store the identifier of the analytics logical function network element (for example, the AnLF ID) as part of an allowed NF consumer list (allowed NFc list). The allowed NFc list is associated with the model corresponding to the analytics ID. In other words, the allowed NFc list is a list of network function instance identifiers that are allowed to obtain/retrieve the model corresponding to the analytics ID. For example, the second model training logical function network element (for example, the MTLF2) may store the identifier of the analytics logical function network element (for example, the AnLF ID) as a part of the allowed NFc list for the model, and may send an Nadrf_MLModelManagement_StorageRequest (an Nadrf machine learning model management storage request) to the ADRF network element, to trigger an update at the ADRF network element. The Nadrf_MLModelManagement_StorageRequest may include the identifier of the second model training logical function network element (for example, the MTLF2 ID), the model ID, and the allowed NFc list.

In embodiments of this application, the "allowed NF consumer list (allowed NFc list)" may be understood as a list of network function instance identifiers (NF instance IDs) that are allowed to obtain/retrieve/access/query for a model. The "allowed NF consumer list (allowed NFc list)" may also be referred to as an "allowed NF instance identifier list (Allowed NF Instance ID list)", an "allowed network function list (Allowed NF list)", or the like. This is not limited in this application.

In this embodiment of this application, after receiving the model retrieval request of the AnLF, the MTLF1 finds, according to an internal policy, that the MTLF 1 cannot provide a model that meets a requirement. The MTLF 1 may request, for (or on behalf of (behalf)) the AnLF, a model that meets the requirement from another MTLF (for example, the MTLF2). For example, the MTLF1 first requests the authorization token (namely, the first token) from the NRF for (or on behalf of (behalf)) the AnLF. The request includes the AnLF ID and the MTLF2 ID. After verifying that the AnLF has the permission to obtain the model from the MTLF2, the NRF returns the authorization token (namely, the first token) to the MTLF1. After obtaining the authorization token, the MTLF1 requests, for (or on behalf of (behalf)) the AnLF, information about the model that meets the requirement from the MTLF2. The request includes the AnLF ID and the authorization token. After successfully verifying the authorization token, the MTLF2 sends the information about the model that meets the requirement to the AnLF. The foregoing process helps implement model obtaining and model authorization in the delegated model acquisition scenario, and an actual model consumer (namely, the AnLF) is authorized in the delegated model acquisition scenario, to improve model security.

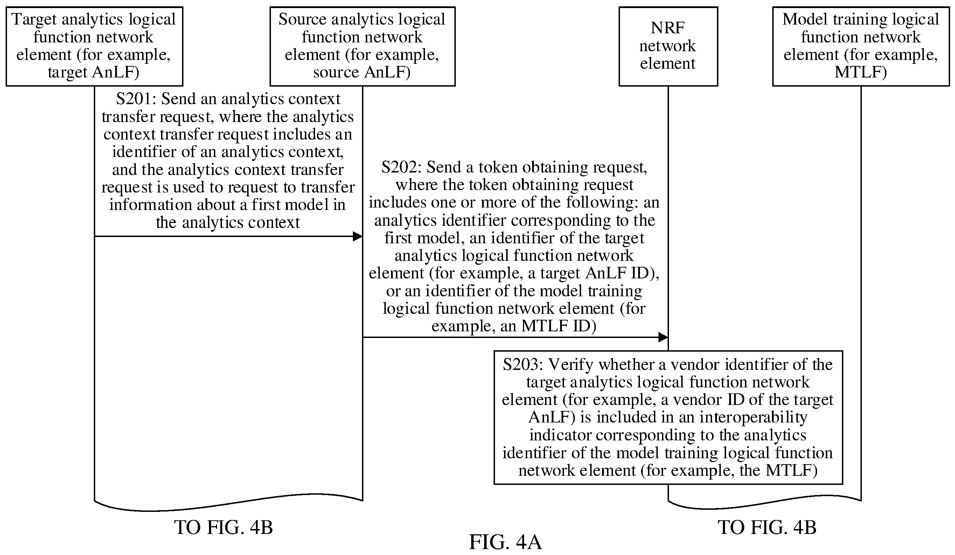

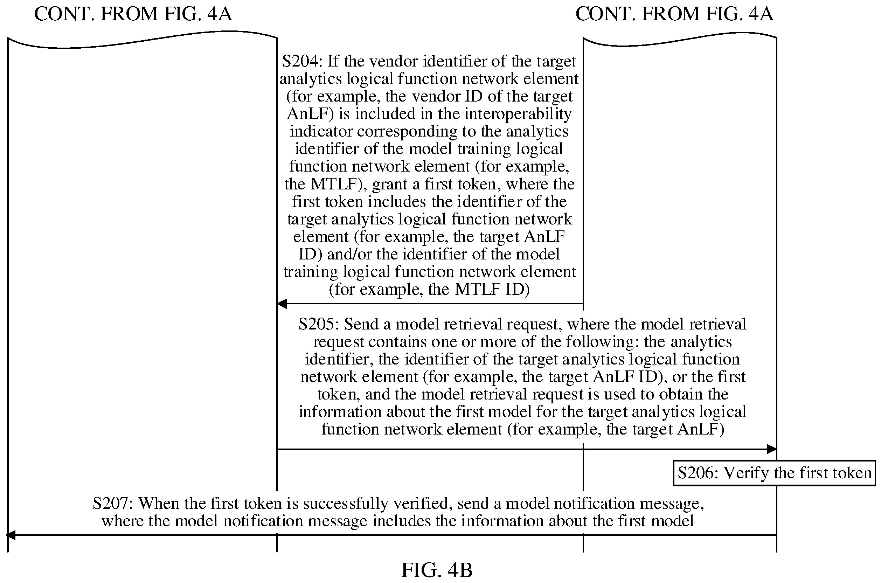

FIG. 4A and FIG. 4B are another schematic flowchart of a model authorization method according to an embodiment of this application. In this method, a source analytics logical function network element may be a network element having an analytics logical function network element, for example, a source NWDAF network element containing AnLF (a Source NWDAF containing AnLF), which may be referred to as a source AnLF (a Source AnLF) for short. A target analytics logical function network element may be another network element having an analytics logical function network element, for example, a target NWDAF network element containing AnLF (a Target NWDAF containing AnLF), which may be referred to as a target AnLF (a Target AnLF) for short. A model training logical function network element may be a network element having a model training logical function, for example, an NWDAF network element containing MTLF (an NWDAF containing MTLF), which may be referred to as an MTLF for short. The method mainly describes that in a process of analytics subscription transfer or analytics context transfer, the source AnLF requests a model in an analytics context from the MTLF for the target AnLF.

As shown in FIG. 4A and FIG. 4B, the model authorization method includes but is not limited to the following steps.

S201: The target analytics logical function network element (for example, the target AnLF) sends an analytics context transfer request to the source analytics logical function network element (for example, the source AnLF), where the analytics context transfer request includes an identifier of an analytics context, and the analytics context transfer request is used to request to transfer information about a first model in the analytics context.

Correspondingly, the source analytics logical function network element (for example, the source AnLF) receives the analytics context transfer request.

In a possible implementation, before step S201, the model authorization method further includes: The source analytics logical function network element (for example, the source AnLF) and the target analytics logical function network element (for example, the target AnLF) each send a registration request message to an NRF network element. For example, the source analytics logical function network element (for example, the source AnLF) may send a registration request message 1 to the NRF network element. The registration request message 1 includes an analytics ID and a vendor ID of the source analytics logical function network element (for example, the source AnLF), and optionally further includes a first operation indicator of the source analytics logical function network element (for example, the source AnLF). The NRF network element may store information included in the registration request message 1 in an NF profile of the source analytics logical function network element (for example, the source AnLF). For another example, the target analytics logical function network element (for example, the target AnLF) may send a registration request message 2 to the NRF network element. The registration request message 2 includes an analytics ID and a vendor ID of the target analytics logical function network element (for example, the target AnLF), and optionally further includes a second operation indicator of the target analytics logical function network element (for example, the target AnLF). The NRF network element may store information included in the registration request message 2 in an NF profile of the target analytics logical function network element (for example, the target AnLF). The first operation indicator and the second operation indicator may be new operation indicators provided in this embodiment of this application. For example, the first operation indicator may indicate a model that is available to the source analytics logical function network element (for example, the source AnLF), and the second operation indicator may indicate a model that is available to the target analytics logical function network element (for example, the target AnLF).

The following describes the operation indicator provided in this embodiment of this application.

For example, the operation indicator may correspond to an analytics logical function network element (for example, an AnLF), that is, the operation indicator is at an AnLF granularity. Alternatively, the operation indicator corresponds to an analytics identifier, that is, the operation indicator is at an analytics identifier granularity.

In a possible implementation, if the operation indicator corresponds to an AnLF, that is, one AnLF corresponds to one operation indicator, the operation indicator may include a vendor identifier list (or vendor list), or may be described as an NWDAF provider (or vendor) list. The AnLF allows retrieval or usage of a model provided by a vendor in the vendor list. The operation indicator also indicates that AnLF supports usage of a model provided by a network element (for example, an NWDAF) of a vendor in the vendor list. That is, the operation indicator is applicable per analytics identifier.

For example, the operation indicator includes an identifier of a vendor 1 and an identifier of a vendor 2, that is, the AnLF can use a model provided by the vendor 1 and a model provided by the vendor 2. Alternatively, this may be understood as that if a vendor of the MTLF1 is the vendor 1 or the vendor 2, the AnLF may use a model trained by the MTLF1. For example, assuming that the model provided by vendor 1 includes a model corresponding to an analytics identifier 1 and a model corresponding to an analytics identifier 2, AnLF may use the two models.

It may be understood that the model provided by the vendor 1 may be understood as a model produced (or trained) by the vendor 1 or a model produced (or trained) by an MTLF, and a vendor of the MTLF is the vendor 1.

In another possible implementation, if the operation indicator corresponds to an analytics identifier, that is, one AnLF may correspond to one or more operation indicators, different operation indicators may correspond to different analytics identifiers. An operation indicator corresponding to one analytics identifier includes a vendor identifier list (or vendor list), or may be described as an NWDAF provider (or vendor) list. The AnLF allows retrieval or usage of a model provided by a vendor in the vendor list. The operation indicator also indicates that AnLF supports usage of models provided by a network element (for example, an NWDAF) of a vendor in the vendor list, and the models correspond to an analytics identifier.

For example, it is assumed that the operation indicator of the AnLF includes an operation indicator a corresponding to an analytics identifier 1 and an operation indicator b corresponding to an analytics identifier 2. The operation indicator a corresponding to the analytics identifier 1 includes an identifier of a vendor 1 and an identifier of a vendor 2, that is, the AnLF can use a model provided by the vendor 1 and a model provided by the vendor 2, and the models correspond to the analytics identifier 1. For example, assuming that the model provided by vendor 1 includes a model corresponding to the analytics identifier 1 and a model corresponding to the analytics identifier 2, AnLF may use the model corresponding to the analytics identifier 1, but cannot use the model corresponding to the analytics identifier 2. The operation indicator b corresponding to the analytics identifier 2 includes an identifier of a vendor 4, that is, the AnLF can use a model provided by the vendor 4, and the model corresponds to the analytics identifier 2. For example, assuming that the model provided by vendor 4 includes a model corresponding to the analytics identifier 1 and a model corresponding to the analytics identifier 2, AnLF may use the model corresponding to the analytics identifier 2, but cannot use the model corresponding to the analytics identifier 1.

Therefore, the first operation indicator may include a vendor identifier list (or a vendor list). The first operation indicator may indicate that the source analytics logical function network element (for example, the source AnLF) supports usage of a model provided by a vendor in the vendor list. Alternatively, the first operation indicator may indicate that the source analytics logical function network element (for example, the source AnLF) supports usage of a model that is provided by a vendor in the vendor list and that corresponds to an analytics identifier. In other words, the first operation indicator may indicate that specific model producers, where usage of models of the model producers is supported by the source analytics logical function network element (for example, the source AnLF). Alternatively, the first operation indicator may indicate specific models of specific model producers, where usage of the models is supported by the source analytics logical function network element (for example, the source AnLF). Similarly, the second operation indicator may also include a vendor identifier list (or a vendor list). The second operation indicator may indicate that the target analytics logical function network element (for example, the target AnLF) supports usage of a model provided by a vendor in the vendor list. Alternatively, the second operation indicator may indicate that the target analytics logical function network element (for example, the target AnLF) supports usage of a model that is provided by a vendor in the vendor list and that corresponds to an analytics identifier. In other words, the second operation indicator may indicate that specific model producers, where usage of models of the model producers is supported by the target analytics logical function network element (for example, the target AnLF). Alternatively, the second operation indicator may indicate specific models of specific model producers, where usage of the models is supported by the target analytics logical function network element (for example, the target AnLF).

In a possible implementation, the target analytics logical function network element (for example, the target AnLF) may send the analytics context transfer request to the source analytics logical function network element (for example, the source AnLF). The analytics context transfer request may include but is not limited to the identifier of the analytics context, for example, a subscription correlation identifier (Subscription Correlation ID). The subscription correlation identifier may identify an analytics subscription for which a related analytics context is requested (Subscription Correlation ID: identifies the analytics subscription for which the related analytics context is requested). The analytics context may include model-related information, for example, an identifier of a model producer/provider/trainer (for example, an NWDAF containing MTLF), an identifier of a model, a file address of the model, or an analytics identifier corresponding to the model. It may be understood that the analytics context may include identifiers of a plurality of model producers/providers/trainers (for example, NWDAFs containing MTLF). For ease of brevity, in this embodiment of this application, one model producer/provider/trainer providing a model is used as an example for description. The analytics context transfer request may be used to request to transfer information about one or more models in the analytics context. For brevity, in this embodiment of this application, an example in which the analytics context transfer request is used to request to transfer the information about the first model in the analytics context is used for description.

In a possible implementation, after receiving the analytics context transfer request, the source analytics logical function network element (for example, the source AnLF) may return analytics context information to the target analytics logical function network element (for example, the target AnLF). The analytics context information may include other information in the analytics context transfer request other than the model-related information, for example, an active data source identifier (ID) and a subscription correlation identifier.

In a possible implementation, the analytics context transfer request may further include one or both of the following: the second operation indicator of the target analytics logical function network element (for example, the target AnLF) or a vendor identifier of the target analytics logical function network element (for example, a vendor ID of the target AnLF). For descriptions of the second operation indicator, refer to the foregoing descriptions. Details are not described herein again.

In a possible implementation, if the analytics context transfer request includes the second operation indicator, after receiving the analytics context transfer request, the source analytics logical function network element (for example, the source AnLF) may determine whether the second operation indicator of the target analytics logical function network element (for example, the target AnLF) belongs to the first operation indicator of the source analytics logical function network element (for example, the source AnLF). In other words, the source analytics logical function network element (for example, the source AnLF) may determine whether the target analytics logical function network element (for example, the target AnLF) has a capability or permission to use the model in the foregoing analytics context. For example, the source analytics logical function network element (for example, the source AnLF) may determine whether a provider/producer of the first model is located in the second operation indicator. If the provider/producer of the first model is located in the second operation indicator, it indicates that the target analytics logical function network element (for example, the target AnLF) can use the first model in the analytics context. Then, the source analytics logical function network element (for example, the source AnLF) may return analytics context information to the target analytics logical function network element (for example, the target AnLF). For descriptions of the analytics context information, refer to the foregoing descriptions. Details are not described herein again.

In another possible implementation, if the analytics context transfer request includes a vendor identifier of the target analytics logical function network element (for example, a vendor ID of the target AnLF), after receiving the analytics context transfer request, the source analytics logical function network element (for example, the source AnLF) may determine whether the vendor identifier of the target analytics logical function network element (for example, the vendor ID of the target AnLF) is included in an interoperability indicator of an information provider (for example, an MTLF) of the first model. If the vendor identifier of the target analytics logical function network element (for example, the vendor ID of the target AnLF) is included in the interoperability indicator of the information provider of the first model, it indicates that the target analytics logical function network element (for example, the target AnLF) can obtain/retrieve/query for the first model. It may be understood that the information provider of the first model may be a producer of the first model, or may not be the producer of the first model and is only a provider of the first model (the information provider does not produce the first model). Then, the source analytics logical function network element (for example, the source AnLF) may return analytics context information to the target analytics logical function network element (for example, the target AnLF). For descriptions of the analytics context information, refer to the foregoing descriptions. Details are not described herein again. It may be understood that the interoperability indicator may be per each analytics ID (Per Analytics ID), or one interoperability indicator corresponds to one analytics ID, and the interoperability indicator may be in one-to-one correspondence with the analytics ID. For different analytics IDs, there may be different interoperability indicators. Certainly, the interoperability indicator may alternatively be per model producer (MTLF), or one interoperability indicator corresponds to one model producer (MTLF), and the interoperability indicator may be in one-to-one correspondence with the model producer (MTLF). For different model producers (MTLFs), there may be different interoperability indicators.

In a possible implementation, before step S201 (and after a network element registration procedure), the model authorization method further includes: An NWDAF service consumer (NWDAF service consumer) sends an analytics subscription service request carrying an analytics ID to the source analytics logical function network element (for example, the source AnLF). After receiving the analytics subscription service request, the source analytics logical function network element (for example, the source AnLF) may subscribe to, from the model training logical function network element (for example, the MTLF), a model associated with the analytics ID. The model training logical function network element (for example, the MTLF) returns a corresponding response message carrying a subscription correlation identifier 1. Optionally, the model training logical function network element (for example, the MTLF) may send a model ID associated with the analytics ID to the source analytics logical function network element (for example, the source AnLF), and the source analytics logical function network element (for example, the source AnLF) may obtain, based on the model ID, a model identified by the model ID. The source analytics logical function network element (for example, the source AnLF) sends, to the NWDAF service consumer, an analytics subscription service response including a subscription correlation identifier 2 (namely, the identifier of the foregoing analytics context). The NWDAF service consumer determines to initiate an analytics context transfer procedure, and determines the target analytics logical function network element (for example, the target AnLF). The NWDAF service consumer sends, to the target analytics logical function network element (for example, the target AnLF), an analytics subscription request including the subscription correlation identifier 2 (namely, the identifier of the analytics context). After receiving the analytics subscription request, the target analytics logical function network element (for example, the target AnLF) may perform step S201.

S202: The source analytics logical function network element (for example, source AnLF) sends a token get request to the NRF network element, where the token get request contains one or more of the following: an analytics identifier corresponding to the first model, an identifier of the target analytics logical function network element (for example, a target AnLF ID), or an identifier of the model training logical function network element (for example, an MTLF ID). The model training logical function network element (for example, the MTLF) may be configured to train and/or provide the information about the first model.

Correspondingly, the NRF network element receives the token get request.

In a possible implementation, after receiving the analytics context transfer request, the source analytics logical function network element (for example, the source AnLF) determines that a model training logical function network element (for example, an MTLF) produces/trains/provides the first model for the target analytics logical function network element (for example, the target AnLF ID). In other words, the producer/trainer/provider of the first model is the model training logical function network element. The source analytics logical function network element (for example, the source AnLF) may send the token get request to the NRF network element. The token get request contains one or more of the following: the analytics identifier corresponding to the first model, the identifier of the target analytics logical function network element (for example, the target AnLF ID), or the identifier of the model training logical function network element (for example, the MTLF ID). The analytics ID may be an identifier of an analytics service corresponding to the first model for which authorization is requested. For a function of the token get request, refer to the related descriptions in the embodiment shown in FIG. 3A and FIG. 3B.

It may be understood that the target analytics logical function network element (for example, the target AnLF) in this embodiment of this application may be similar to the analytics logical function network element (for example, the AnLF) in the embodiment shown in FIG. 3A and FIG. 3B, and the source analytics logical function network element (for example, the source AnLF) in this embodiment of this application may be similar to the first model training logical function network element (for example, the MTLF1) in the embodiment shown in FIG. 3A and FIG. 3B. The model training logical function network element (for example, the MTLF) in this embodiment of this application may be similar to the second model training logical function network element (for example, the MTLF2) in the embodiment shown in FIG. 3A and FIG. 3B. Details are not described below.

In a possible implementation, the token get request may further include one or more of the following: the identifier of the source analytics logical function network element (for example, the source AnLF ID), the vendor identifier of the target analytics logical function network element (for example, the vendor ID of the target AnLF), the identifier of the first model, or first indication information. The vendor identifier of the target analytics logical function network element (for example, the vendor ID of the target AnLF) may be used by the NRF network element to verify whether the target analytics logical function network element can be authorized to obtain the information about the first model from the model training logical function network element (for example, the MTLF). For a specific verification manner, refer to the following descriptions. For a function of the first indication information, refer to the related descriptions in the embodiment shown in FIG. 3A and FIG. 3B. Details are not described herein again.

S203: The NRF network element verifies whether the vendor identifier of the target analytics logical function network element (for example, the vendor ID of the target AnLF) is included in the interoperability indicator corresponding to the analytics identifier of the model training logical function network element (for example, the MTLF).

S204: If the vendor identifier of the target analytics logical function network element (for example, the vendor ID of the target AnLF) is included in the interoperability indicator corresponding to the analytics identifier of the model training logical function network element (for example, the MTLF), the NRF network element sends a first token to the source analytics logical function network element (for example, the source AnLF), where the first token includes the identifier of the target analytics logical function network element (for example, the target AnLF ID) and/or the identifier of the model training logical function network element (for example, the MTLF ID).

Correspondingly, the source analytics logical function network element (for example, the source AnLF) receives the first token.

In a possible implementation, after receiving the token get request, the NRF network element may verify whether the vendor identifier of the target analytics logical function network element (for example, the vendor ID of the target AnLF) is included in the interoperability indicator corresponding to the analytics identifier of the model training logical function network element (for example, the MTLF). In other words, after receiving the token get request, the NRF network element may verify whether the target analytics logical function network element (for example, the target AnLF) has permission to obtain the first model from the model training logical function network element (for example, the MTLF). For example, the NRF network element may determine, in a plurality of locally stored NF profiles, an NF profile 3 corresponding to the target analytics logical function network element (for example, the target AnLF), and may obtain the vendor identifier of the target analytics logical function network element (for example, the vendor ID of the target AnLF) from the NF profile 3. It may be understood that when the token get request contains the vendor identifier of the target analytics logical function network element (for example, the vendor ID of the target AnLF), the NRF network element may obtain the vendor identifier of the target analytics logical function network element (for example, the vendor ID of the target AnLF) from the token get request, and does not need to search the locally stored NF profile. The NRF network element may further determine, in the plurality of locally stored NF profiles, an NF profile 4 corresponding to the identifier of the model training logical function network element (for example, the MTLF ID), and may obtain, from the NF profile 4, an interoperability indicator corresponding to the analytics ID (the analytics ID carried in the token get request herein).

Then, the NRF network element may verify whether the interoperability indicator corresponding to the analytics ID includes the vendor identifier of the target analytics logical function network element (for example, the vendor ID of the target AnLF). If the interoperability indicator corresponding to the analytics ID in the NF profile 4 includes the vendor identifier of the target analytics logical function network element (for example, the vendor ID of the target AnLF), it indicates that the target analytics logical function network element (for example, the target AnLF) has the permission to obtain the model from the model training logical function network element (for example, the MTLF). In this case, the NRF network element may generate an authorization token (namely, a first token, a token 2) of the model, and may send the first token (the token 2) to the source analytics logical function network element (for example, the source AnLF). The first token (the token 2) may include a part or all of content of the token get request. For example, the first token may include but is not limited to one or more of the following: the analytics ID corresponding to the first model, the identifier of the target analytics logical function network element (for example, the target AnLF ID), or the identifier of the model training logical function network element (for example, the MTLF ID). For descriptions of the first token, refer to the related descriptions in the embodiment shown in FIG. 3A and FIG. 3B. Details are not described herein again.

In a possible implementation, the first token may further include one or more of the following: the analytics ID, the identifier of the source analytics logical function network element (for example, the source AnLF ID), the vendor identifier of the target analytics logical function network element (for example, the vendor ID of the target AnLF), the identifier of the first model, or second indication information. For a function of the second indication information, refer to the related descriptions in the embodiment shown in FIG. 3A and FIG. 3B. Details are not described herein.

In a possible implementation, if the interoperability indicator corresponding to the analytics ID in the NF profile 4 does not include the vendor identifier of the target analytics logical function network element (for example, the vendor ID of the target AnLF), it indicates that the target analytics logical function network element (for example, the target AnLF) has no permission to obtain the model from the model training logical function network element (for example, the MTLF). The NRF network element may send a response message to the source analytics logical function network element (for example, the source AnLF), to reject the token get request. For descriptions of the response message, refer to the related descriptions in the embodiment shown in FIG. 3A and FIG. 3B. Details are not described herein.

In a possible implementation, when the token get request contains the first indication information, after receiving the token get request, the NRF network element may determine, based on the first indication information, that the token get request is that the source analytics logical function network element (for example, the source AnLF) requests the NRF network element to authorize the target analytics logical function network element (for example, the target AnLF) to obtain the model of the model training logical function network element (for example, the MTLF). Then, the verification in step S203 is performed.

S205: The source analytics logical function network element (for example, the source AnLF) sends a model retrieval request to the model training logical function network element (for example, the MTLF), where the model retrieval request includes one or more of the following: the analytics identifier, the identifier of the target analytics logical function network element (for example, the target AnLF ID), or the first token, and the model retrieval request is used to obtain the information about the first model for the target analytics logical function network element (for example, the target AnLF). The first token may be used to check the model retrieval request.

Correspondingly, the model training logical function network element (for example, the MTLF) receives the model retrieval request.

S206: The model training logical function network element (for example, the MTLF) verifies the first token.

S207: When the first token is successfully verified, the model training logical function network element (for example, the MTLF) sends a model notification message to the target analytics logical function network element (for example, the target AnLF), where the model notification message includes the information about the first model.

Correspondingly, the target analytics logical function network element (for example, the target AnLF) receives the model notification message.

In a possible implementation, after receiving the first token, the source analytics logical function network element (for example, the source AnLF) may send the model retrieval request to the model training logical function network element (for example, the MTLF). The model retrieval request may be used to obtain the information about the first model for the target analytics logical function network element (for example, the target AnLF). The model retrieval request may include but is not limited to one or more of the following: the analytics identifier corresponding to the first model, the identifier of the target analytics logical function network element (for example, the target AnLF ID), or the first token. The first token may be used to check the model retrieval request, or the first token may be used to check various identifiers in the model retrieval request. Alternatively, the first token may be used to check the permission of the target analytics logical function network element (for example, the target AnLF) to obtain the first model from the model training logical function network element (for example, the MTLF). Alternatively, the first token may be used to check permission of the source analytics logical function network element (for example, the source AnLF) to obtain the first model from the model training logical function network element (for example, the MTLF) for (or on behalf of (behalf)) the target analytics logical function network element (for example, the target AnLF).

In a possible implementation, after receiving the model retrieval request, the model training logical function network element (for example, the MTLF) may verify the first token (the token 2). A manner in which the model training logical function network element (for example, the MTLF) verifies the first token is the same as the manner in which the second model training logical function network element (for example, the MTLF2) verifies the first token in the embodiment shown in FIG. 3A and FIG. 3B. Details are not described herein.

In a possible implementation, the model retrieval request may further include one or more of the following: the identifier of the source analytics logical function network element (for example, the source AnLF ID), an address (for example, a URL or an FQDN) of the target analytics logical function network element, the identifier of the first model, the vendor identifier of the target analytics logical function network element (for example, the vendor ID of the target AnLF), or third indication information. For example, the address of the target analytics logical function network element may be carried via a subscription endpoint address. The subscription endpoint address may indicate an address for receiving the model notification message. For descriptions of the third indication information, refer to the related descriptions in the embodiment shown in FIG. 3A and FIG. 3B. Details are not described herein. It may be understood that the model retrieval request in this embodiment of this application may be similar to the second model retrieval request in the embodiment shown in FIG. 3A and FIG. 3B.

In a possible implementation, when the first token is successfully verified, the model training logical function network element (for example, the MTLF) may send the model notification message to the target analytics logical function network element (for example, the target AnLF). It may be understood that the model training logical function network element (for example, the MTLF) may directly send the model notification message to the target analytics logical function network element (for example, the target AnLF), or may forward the model notification message via an intermediate network element. This is not limited in this embodiment of this application. For example, the model training logical function network element (for example, the MTLF) may send the model notification message to the target analytics logical function network element (for example, the target AnLF) via the source analytics logical function network element (for example, the source AnLF). For example, the model training logical function network element (for example, the MTLF) sends the model notification message to the source analytics logical function network element (for example, the source AnLF), and the source analytics logical function network element (for example, the source AnLF) may forward the model notification message to the target analytics logical function network element (for example, the target AnLF). The forwarding herein may be transparent transmission, or may be forwarding after the model notification message is processed. This is not limited in this embodiment of this application. The model notification message received by the target analytics logical function network element (for example, the target AnLF) may include the information about the first model, for example, the ID of the first model, an address of the first model in the model training logical function network element (for example, the MTLF), or a model file. For example, the model notification message may further include an identifier (for example, an ADRF ID) of an ADRF network element that stores the first model. After receiving the model notification message, the analytics logical function network element (for example, the AnLF) may obtain (or download) the model file of the first model based on the model notification message and locally store the model file.

In a possible implementation, when the first token is successfully verified, the model training logical function network element (for example, the MTLF) may further store the identifier of the target analytics logical function network element (for example, the target AnLF ID) as part of an allowed NF consumer list (allowed NFc list). The allowed NFc list is associated with the first model. In other words, the allowed NFc list is a list of network function instance identifiers that are allowed to obtain/retrieve the first model.

In this embodiment of this application, after receiving the analytics context transfer request of the target AnLF, the source AnLF requests the authorization token (namely, the first token) from the NRF for (or on behalf of behalf) the target AnLF. The request includes the target AnLF ID and the MTLF ID. After verifying that the target AnLF has the permission to obtain the first model in the analytics context from the MTLF, the NRF returns the authorization token (namely, the first token) to the source AnLF. After obtaining the authorization token, the source AnLF requests the information about the first model from the MTLF for (or on behalf of behalf) the target AnLF. The request includes the target AnLF ID and the authorization token. After the authorization token is successfully verified, the MTLF sends the information about the first model to the target AnLF. The foregoing process helps implement model obtaining and model authorization in the delegated model acquisition scenario, and an actual model consumer (namely, the target AnLF) is authorized in the delegated model acquisition scenario, to improve model security.

The foregoing describes in detail the method in this application. To better implement the foregoing solutions in embodiments of this application, embodiments of this application further provide a corresponding apparatus or device.

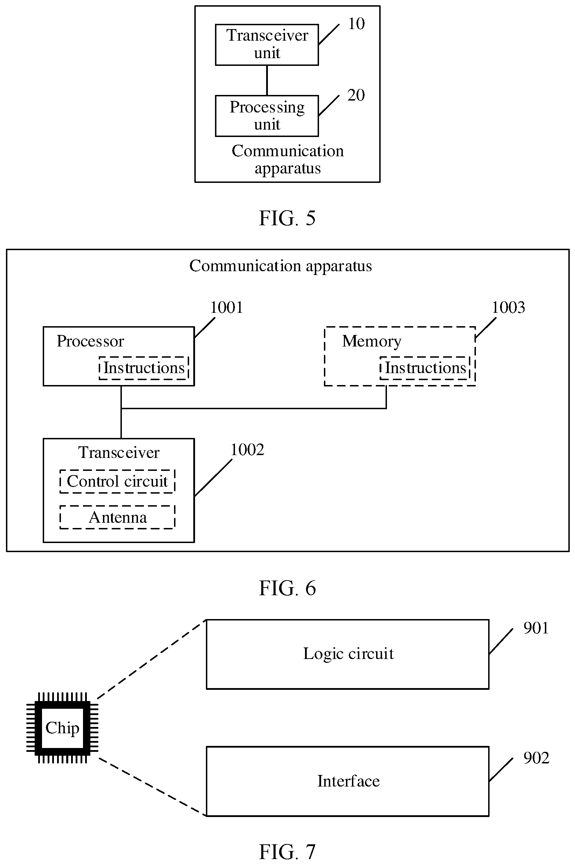

In embodiments of this application, functional modules of the network elements in this application may be obtained through division based on the foregoing method examples, and functional modules of the foregoing network elements are also obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. The following describes in detail a communication apparatus in embodiments of this application with reference to FIG. 5 to FIG. 7.

FIG. 5 is a diagram of a structure of a communication apparatus according to an embodiment of this application. As shown in FIG. 5, the communication apparatus includes a transceiver unit 10 and a processing unit 20. The transceiver unit 10 may implement a corresponding communication function, and the processing unit 20 is configured to perform data processing. For example, the transceiver unit 10 may also be referred to as a communication interface, a communication unit, or the like.

In some embodiments of this application, the communication apparatus may be the first model training logical function network element shown above. That is, the communication apparatus shown in FIG. 5 may be configured to perform the steps, functions, or the like performed by the first model training logical function network element in the foregoing method embodiments. For example, the communication apparatus may be the first model training logical function network element, or a chip, a functional module, or the like configured in the first model training logical function network element. This is not limited in this embodiment of this application. The transceiver unit 10 is configured to perform receiving/sending-related operations of the first model training logical function network element in the foregoing method embodiments, and the processing unit 20 is configured to perform processing-related operations of the first model training logical function network element in the foregoing method embodiments.

For example, the transceiver unit 10 is configured to receive a first model retrieval request from an analytics logical function network element. The first model retrieval request includes an analytics identifier, and the first model retrieval request is used to request information about a model corresponding to the analytics identifier. The transceiver unit 10 is further configured to send a token get request to a network repository function NRF network element. The token get request contains the analytics identifier, an identifier of the analytics logical function network element, and an identifier of a second model training logical function network element, and the second model training logical function network element is used to provide the information about the model. The transceiver unit 10 is further configured to receive a first token from the NRF network element. The first token includes the identifier of the analytics logical function network element and the identifier of the second model training logical function network element. The transceiver unit 10 is further configured to send a second model retrieval request to the second model training logical function network element. The second model retrieval request includes the analytics identifier, the identifier of the analytics logical function network element, and the first token, the second model retrieval request is used to obtain the information about the model for the analytics logical function network element, and the first token is used to verify the second model retrieval request.

For example, the processing unit 20 is configured to generate various information sent by the transceiver unit 10, for example, the token get request and the second model retrieval request. The processing unit 20 is further configured to control the transceiver unit 10 to send or receive the various information.

For example, the transceiver unit 10 is further configured to send a network element discovery request to the NRF network element. The network element discovery request includes the analytics identifier, the identifier of the analytics logical function network element, and/or a vendor identifier of the analytics logical function network element. The transceiver unit 10 is further configured to receive a network element discovery response from the NRF network element. The network element discovery response includes a candidate network element list, the network element list includes the second model training logical function network element, and an interoperability indicator corresponding to the analytics identifier of the second model training logical function network element includes the vendor identifier of the analytics logical function network element.

In this embodiment of this application, for specific descriptions of the first model retrieval request, the token get request, the first token, the second model retrieval request, the network element discovery request, the network element discovery response, and the network elements, refer to the method embodiment shown in FIG. 3A and FIG. 3B. Details are not described herein again.

It may be understood that the specific descriptions of the transceiver unit and the processing unit in this embodiment of this application are merely examples. For specific functions, steps, or the like performed by the transceiver unit and the processing unit, refer to the method embodiment shown in FIG. 3A and FIG. 3B. Details are not described herein again. In addition, for technical effects of this embodiment of this application, refer to the technical effects in the method embodiment shown in FIG. 3A and FIG. 3B. For brevity, details are not described herein again.

Reuse FIG. 5. In some other embodiments of this application, the communication apparatus may be the source analytics logical function network element shown above. That is, the communication apparatus shown in FIG. 5 may be configured to perform the steps, functions, or the like performed by the source analytics logical function network element in the foregoing method embodiments. For example, the communication apparatus may be the source analytics logical function network element, or a chip, a functional module, or the like configured in the source analytics logical function network element. This is not limited in this embodiment of this application. The transceiver unit 10 is configured to perform receiving/sending-related operations of the source analytics logical function network element in the foregoing method embodiments, and the processing unit 20 is configured to perform processing-related operations of the source analytics logical function network element in the foregoing method embodiments.

For example, the transceiver unit 10 is configured to receive an analytics context transfer request from a target analytics logical function network element. The analytics context transfer request includes an identifier of an analytics context, and the analytics context transfer request is used to request to transfer information about a first model in the analytics context. The transceiver unit 10 is further configured to send a token get request to an NRF network element. The token get request contains an analytics identifier corresponding to the first model, an identifier of the target analytics logical function network element, and an identifier of a model training logical function network element, and the model training logical function network element is used to provide the information about the first model. The transceiver unit 10 is further configured to receive a first token from the NRF network element. The first token includes the identifier of the target analytics logical function network element and the identifier of the model training logical function network element. The transceiver unit 10 is further configured to send a model retrieval request to the model training logical function network element. The model retrieval request includes the analytics identifier, the identifier of the target analytics logical function network element, and the first token, the model retrieval request is used to obtain the information about the first model for the target analytics logical function network element, and the first token is used to check the model retrieval request.

For example, the processing unit 20 is configured to generate various information sent by the transceiver unit 10, for example, the token get request and the model retrieval request. The processing unit 20 is further configured to control the transceiver unit 10 to send or receive the various information.

For example, the processing unit 20 is further configured to determine whether a provider of the first model is located in a second operation indicator of the target analytics logical function network element. The second operation indicator indicates a provider of a model that is available to the target analytics logical function network element.

For example, the processing unit 20 is further configured to determine that a vendor identifier of the target analytics logical function network element is included in an interoperability indicator of an information provider of the first model.

For example, the transceiver unit 10 is further configured to send a network element registration request to the NRF network element. The network element registration request includes a first operation indicator of the source analytics logical function network element, and the first operation indicator indicates a provider of a model that is available to the source analytics logical function network element.

In this embodiment of this application, for specific descriptions of the context transfer request, the token get request, the first token, the model retrieval request, the network element registration request, the first operation indicator, the second operation indicator, and the network elements, refer to the method embodiment shown in FIG. 4A and FIG. 4B. Details are not described herein again.

It may be understood that the specific descriptions of the transceiver unit and the processing unit in this embodiment of this application are merely examples. For specific functions, steps, or the like performed by the transceiver unit and the processing unit, refer to the method embodiment shown in FIG. 4A and FIG. 4B. Details are not described herein again. In addition, for technical effects of this embodiment of this application, refer to the technical effects in the method embodiment shown in FIG. 4A and FIG. 4B. For brevity, details are not described herein again.

Reuse FIG. 5. In still some other embodiments of this application, the communication apparatus may be the NRF network element shown above. That is, the communication apparatus shown in FIG. 5 may be configured to perform the steps, functions, or the like performed by the NRF network element in the foregoing method embodiments. For example, the communication apparatus may be the NRF network element, or a chip, a functional module, or the like configured in the NRF network element. This is not limited in this embodiment of this application. The transceiver unit 10 is configured to perform a receiving/sending-related operations of the NRF network element in the foregoing method embodiments, and the processing unit 20 is configured to perform processing-related operations of the NRF network element in the foregoing method embodiments.

For example, the transceiver unit 10 is configured to receive a token get request from a first model training logical function network element. The token get request contains an analytics identifier, an identifier of an analytics logical function network element, and an identifier of a second model training logical function network element, and the second model training logical function network element is used to provide information about a model corresponding to the analytics identifier. The processing unit 20 is configured to verify whether a vendor identifier of the analytics logical function network element is included in an interoperability indicator corresponding to the analytics identifier of the second model training logical function network element. The transceiver unit 10 is further configured to: if the vendor identifier is included in the interoperability indicator, send a first token to the first model training logical function network element. The first token includes the identifier of the analytics logical function network element and the identifier of the second model training logical function network element.

For example, the processing unit 20 is further configured to obtain an interoperability indicator corresponding to the analytics identifier of the second model training logical function network element from an NF profile corresponding to the identifier of the second model training logical function network element.

For example, the processing unit 20 is further configured to obtain the vendor identifier of the analytics logical function network element from an NF profile corresponding to the identifier of the analytics logical function network element.

For example, the transceiver unit 10 is further configured to receive a network element discovery request from the first model training logical function network element. The network element discovery request includes the analytics identifier, the identifier of the analytics logical function network element, and/or the vendor identifier of the analytics logical function network element. The processing unit 20 is further configured to obtain the vendor identifier of the analytics logical function network element based on the network element discovery request. The processing unit 20 is further configured to determine a candidate network element list based on a stored NF profile of each network element. The network element list includes the second model training logical function network element, and the interoperability indicator corresponding to the analytics identifier of the second model training logical function network element includes the vendor identifier of the analytics logical function network element. The transceiver unit 10 is further configured to send a network element discovery response to the first model training logical function network element. The network element discovery response includes the candidate network element list.

For example, the processing unit 20 is specifically configured to obtain the vendor identifier of the analytics logical function network element from an NF profile corresponding to the identifier of the analytics logical function network element.

In this embodiment of this application, for specific descriptions of the token get request, the first token, the network element discovery request, the network element discovery response, and the network elements, refer to the method embodiment shown in FIG. 3A and FIG. 3B. Details are not described herein again.

It may be understood that the specific descriptions of the transceiver unit and the processing unit in this embodiment of this application are merely examples. For specific functions, steps, or the like performed by the transceiver unit and the processing unit, refer to the method embodiment shown in FIG. 3A and FIG. 3B. Details are not described herein again. In addition, for technical effects of this embodiment of this application, refer to the technical effects in the method embodiment shown in FIG. 3A and FIG. 3B. For brevity, details are not described herein again.

For example, the transceiver unit 10 is configured to receive a token get request from a source analytics logical function network element. The token get request contains an analytics identifier, an identifier of a target analytics logical function network element, and an identifier of a model training logical function network element, and the model training logical function network element is used to provide information about a first model corresponding to the analytics identifier. The processing unit 20 is configured to verify whether a vendor identifier of the target analytics logical function network element is included in an interoperability indicator corresponding to the analytics identifier of the model training logical function network element. The transceiver unit 10 is further configured to: if the vendor identifier is included in the interoperability indicator, send a first token to the source analytics logical function network element. The first token includes the identifier of the target analytics logical function network element and the identifier of the model training logical function network element.

For example, the processing unit 20 is further configured to obtain the interoperability indicator corresponding to the analytics identifier of the model training logical function network element from a network function NF profile corresponding to the identifier of the model training logical function network element.

For example, the processing unit 20 is further configured to obtain the vendor identifier of the target analytics logical function network element from an NF profile corresponding to the identifier of the target analytics logical function network element.

For example, the transceiver unit 10 is further configured to receive a first network element registration request from the source analytics logical function network element. The first network element registration request includes a first operation indicator of the source analytics logical function network element, and the first operation indicator indicates a provider of a model that is available to the source analytics logical function network element.

For example, the transceiver unit 10 is further configured to receive a second network element registration request from the target analytics logical function network element. The second network element registration request includes a second operation indicator of the target analytics logical function network element, and the second operation indicator indicates a provider of a model that is available to the target analytics logical function network element.

In this embodiment of this application, for specific descriptions of the token get request, the first token, the first network element registration request, the second network element registration request, and the network elements, refer to the method embodiment shown in FIG. 4A and FIG. 4B. Details are not described herein again.

It may be understood that the specific descriptions of the transceiver unit and the processing unit in this embodiment of this application are merely examples. For specific functions, steps, or the like performed by the transceiver unit and the processing unit, refer to the method embodiment shown in FIG. 4A and FIG. 4B. Details are not described herein again. In addition, for technical effects of this embodiment of this application, refer to the technical effects in the method embodiment shown in FIG. 4A and FIG. 4B. For brevity, details are not described herein again.

Reuse FIG. 5. In yet some other embodiments of this application, the communication apparatus may be the second model training logical function network element shown above. That is, the communication apparatus shown in FIG. 5 may be configured to perform the steps, functions, or the like performed by the second model training logical function network element in the foregoing method embodiments. For example, the communication apparatus may be the second model training logical function network element, or a chip, a functional module, or the like configured in the second model training logical function network element. This is not limited in this embodiment of this application. The transceiver unit 10 is configured to perform receiving/sending-related operations of the second model training logical function network element in the foregoing method embodiments, and the processing unit 20 is configured to perform processing-related operations of the second model training logical function network element in the foregoing method embodiments.

For example, the transceiver unit 10 is configured to receive a second model retrieval request from a first model training logical function network element. The second model retrieval request includes an analytics identifier, an identifier of an analytics logical function network element, and a first token, and the second model retrieval request is used to obtain information about a model corresponding to the analytics identifier for the analytics logical function network element. The processing unit 20 is configured to verify the first token. The transceiver unit 10 is further configured to: when the first token is successfully verified, send a model notification message to the analytics logical function network element. The model notification message includes the information about the model corresponding to the analytics identifier.

In this embodiment of this application, for specific descriptions of the second model retrieval request, the model notification message, and the network elements, refer to the method embodiment shown in FIG. 3A and FIG. 3B. Details are not described herein again.

It may be understood that the specific descriptions of the transceiver unit and the processing unit in this embodiment of this application are merely examples. For specific functions, steps, or the like performed by the transceiver unit and the processing unit, refer to the method embodiment shown in FIG. 3A and FIG. 3B. Details are not described herein again. In addition, for technical effects of this embodiment of this application, refer to the technical effects in the method embodiment shown in FIG. 3A and FIG. 3B. For brevity, details are not described herein again.

Reuse FIG. 5. In yet some other embodiments of this application, the communication apparatus may be the model training logical function network element shown above. That is, the communication apparatus shown in FIG. 5 may be configured to perform the steps, functions, or the like performed by the model training logical function network element in the foregoing method embodiments. For example, the communication apparatus may be the model training logical function network element, or a chip, a functional module, or the like configured in the model training logical function network element. This is not limited in this embodiment of this application. The transceiver unit 10 is configured to perform receiving/sending-related operations of the model training logical function network element in the foregoing method embodiments, and the processing unit 20 is configured to perform processing-related operations of the model training logical function network element in the foregoing method embodiments.

For example, the transceiver unit 10 is configured to receive a model retrieval request from a source analytics logical function network element. The model retrieval request includes an analytics identifier, an identifier of a target analytics logical function network element, and a first token, and the model retrieval request is used to obtain information about a first model corresponding to the analytics identifier for the target analytics logical function network element. The processing unit 20 is configured to verify the first token. The transceiver unit 10 is further configured to: when the first token is successfully verified, send a model notification message to the target analytics logical function network element. The model notification message includes the information about the first model.

In this embodiment of this application, for specific descriptions of the model retrieval request, the model notification message, and the network elements, refer to the method embodiment shown in FIG. 4A and FIG. 4B. Details are not described herein again.

It may be understood that the specific descriptions of the transceiver unit and the processing unit in this embodiment of this application are merely examples. For specific functions, steps, or the like performed by the transceiver unit and the processing unit, refer to the method embodiment shown in FIG. 4A and FIG. 4B. Details are not described herein again. In addition, for technical effects of this embodiment of this application, refer to the technical effects in the method embodiment shown in FIG. 4A and FIG. 4B. For brevity, details are not described herein again.

The foregoing describes the communication apparatus in embodiments of this application, and the following describes a possible product form of the communication apparatus. It should be understood that a product in any form that has a function of the communication apparatus in FIG. 5 falls within the protection scope of embodiments of this application. It should be further understood that the following descriptions are merely an example, and do not limit a product form of the communication apparatus in embodiments of this application.

In a possible implementation, in the communication apparatus shown in FIG. 5, the processing unit 20 may be one or more processors, and the transceiver unit 10 may be a transceiver. Alternatively, the transceiver unit 10 may be a sending unit and a receiving unit, the sending unit may be a transmitter, and the receiving unit may be a receiver. The sending unit and the receiving unit are integrated into one device, for example, a transceiver. In embodiments of this application, the processor and the transceiver may be coupled, or the like. A connection manner of the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before the information is input into the processor.

FIG. 6 is a diagram of another structure of a communication apparatus according to an embodiment of this application. As shown in FIG. 6, the communication apparatus provided in this embodiment of this application may be configured to implement the method described in any one of the foregoing method embodiments. For details, refer to the descriptions in the foregoing method embodiments. The communication apparatus may be the foregoing first model training logical function network element, analytics logical function network element, second model training logical function network element, NRF network element, source analytics logical function network element, target analytics logical function network element, or model training logical function network element, or a chip or a circuit therein. For example, the communication apparatus includes one or more processors 1001 and a transceiver 1002. The communication apparatus may further include a memory 1003. In an implementation, the communication apparatus further includes an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to: perform conversion between a baseband signal and a radio frequency signal and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 1001, the transceiver 1002, and the memory 1003 may be connected through a communication bus.

For example, when the communication apparatus is configured to perform the step, the method, or the function performed by the analytics logical function network element in the foregoing first method embodiment (as shown in FIG. 3A and FIG. 3B), the processor 1001 may be configured to generate a first model retrieval request, and/or configured to perform another process of the technology described in this specification. The transceiver 1002 may be configured to perform step S101 in FIG. 3A, and/or configured to perform another process of the technology described in this specification.

For example, when the communication apparatus is configured to perform the step, the method, or the function performed by the first model training logical function network element in the foregoing first method embodiment (as shown in FIG. 3A and FIG. 3B), the processor 1001 may be configured to generate a token get request and a second model retrieval request, and/or configured to perform another process of the technology described in this specification. The transceiver 1002 may be configured to perform step S102 and step S105 in FIG. 3A and FIG. 3B, and/or configured to perform another process of the technology described in this specification.

For example, when the communication apparatus is configured to perform the step, the method, or the function performed by the NRF network element in the foregoing first method embodiment (as shown in FIG. 3A and FIG. 3B), the processor 1001 may be configured to perform step S103 in FIG. 3A, and/or configured to perform another process of the technology described in this specification. The transceiver 1002 may be configured to perform step S104 in FIG. 3B, and/or configured to perform another process of the technology described in this specification.

For example, when the communication apparatus is configured to perform the step, the method, or the function performed by the second model training logical function network element in the foregoing first method embodiment (as shown in FIG. 3A and FIG. 3B), the processor 1001 may be configured to perform step S106 in FIG. 3B, and/or configured to perform another process of the technology described in this specification. The transceiver 1002 may be configured to perform step S107 in FIG. 3B, and/or configured to perform another process of the technology described in this specification.

For example, when the communication apparatus is configured to perform the step, the method, or the function performed by the target analytics logical function network element in the foregoing second method embodiment (as shown in FIG. 4A and FIG. 4B), the processor 1001 may be configured to generate an analytics context transfer request, and/or configured to perform another process of the technology described in this specification. The transceiver 1002 may be configured to perform step S201 in FIG. 4A, and/or configured to perform another process of the technology described in this specification.

For example, when the communication apparatus is configured to perform the step, the method, or the function performed by the source analytics logical function network element in the foregoing second method embodiment (as shown in FIG. 4A and FIG. 4B), the processor 1001 may be configured to generate a token get request and a model retrieval request, and/or configured to perform another process of the technology described in this specification. The transceiver 1002 may be configured to perform step S202 and step S205 in FIG. 4A and FIG. 4B, and/or configured to perform another process of the technology described in this specification.

For example, when the communication apparatus is configured to perform the step, the method, or the function performed by the NRF network element in the foregoing second method embodiment (as shown in FIG. 4A and FIG. 4B), the processor 1001 may be configured to perform step S203 in FIG. 4A, and/or configured to perform another process of the technology described in this specification. The transceiver 1002 may be configured to perform step S204 in FIG. 4B, and/or configured to perform another process of the technology described in this specification.

For example, when the communication apparatus is configured to perform the step, the method, or the function performed by the model training logical function network element in the foregoing second method embodiment (as shown in FIG. 4A and FIG. 4B), the processor 1001 may be configured to perform step S206 in FIG. 4B, and/or configured to perform another process of the technology described in this specification. The transceiver 1002 may be configured to perform step S207 in FIG. 4B, and/or configured to perform another process of the technology described in this specification.

In any one of the foregoing implementations, the processor 1001 may include a transceiver configured to implement a receiving function and a sending function. For example, the transceiver may be a transceiver circuit, an interface, or an interface circuit. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processor 1001 may store instructions, and the instructions may be a computer program. The computer program is run on the processor 1001, to cause the communication apparatus to perform the method described in the foregoing method embodiments. The computer program may be solidified in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in embodiments of this application may further have more components than those in FIG. 6, or the like. This is not limited in embodiments of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 5, the processing unit 20 may be one or more logic circuits, and the transceiver unit 10 may be an input/output interface, which may also be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 7 is a diagram of still another structure of a communication apparatus according to an embodiment of this application. As shown in FIG. 7, the communication apparatus shown in FIG. 7 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 7 shows an example in which the communication apparatus is the chip. The chip includes the logic circuit 901 and the interface 902.

In this embodiment of this application, the logic circuit and the interface may be further coupled to each other. A specific manner of a connection between the logic circuit and the interface is not limited in this embodiment of this application.

For example, when the communication apparatus is configured to perform the method, the function, or the step performed by the first model training logical function network element in the foregoing first method embodiment (as shown in FIG. 3A and FIG. 3B), the interface 902 is configured to input a first model retrieval request; the logic circuit 901 is configured to generate a token get request; the interface 902 is further configured to output the token get request and input a first token; the logic circuit 901 is further configured to generate a second model retrieval request; and the interface 902 is further configured to output the second model retrieval request.

For example, when the communication apparatus is configured to perform the method, the function, or the step performed by the NRF network element in the foregoing first method embodiment (as shown in FIG. 3A and FIG. 3B), the interface 902 is configured to input a token get request; the logic circuit 901 is configured to verify whether a vendor identifier of an analytics logical function network element is included in an interoperability indicator of a second model training logical function network element; and the interface 902 is configured to output a first token.

In this embodiment of this application, for specific descriptions of the first model retrieval request, the token get request, the first token, the second model retrieval request, and the like, refer to the method Embodiment 1 (as shown in FIG. 3A and FIG. 3B) shown above. Details are not described herein again.

For example, when the communication apparatus is configured to perform the method, the function, or the step performed by the source analytics logical function network element in the foregoing second method embodiment (as shown in FIG. 4A and FIG. 4B), the interface 902 is configured to input an analytics context transfer request; the logic circuit 901 is configured to generate a token get request; the interface 902 is further configured to output the token get request and input a first token; the logic circuit 901 is further configured to generate a model retrieval request; and the interface 902 is further configured to output the model retrieval request.

For example, when the communication apparatus is configured to perform the method, the function, or the step performed by the NRF network element in the foregoing second method embodiment (as shown in FIG. 4A and FIG. 4B), the interface 902 is configured to input a token get request; the logic circuit 901 is configured to verify whether a vendor identifier of a target analytics logical function network element is included in an interoperability indicator of a model training logical function network element; and the interface 902 is configured to output a first token.

In this embodiment of this application, for specific descriptions of the context transfer request, the token get request, the first token, the model retrieval request, and the like, refer to the method Embodiment 2 (as shown in FIG. 4A and FIG. 4B) shown above. Details are not described herein again.

An embodiment of this application further provides a communication system. The communication system includes at least two of a first model training logical function network element, a second model training logical function network element, an analytics logical function network element, and an NRF network element. The at least two of the first model training logical function network element, the second model training logical function network element, the analytics logical function network element, and the NRF network element may be configured to perform the method in the method embodiment shown in FIG. 3A and FIG. 3B.

An embodiment of this application further provides a communication system. The communication system includes at least two of a source analytics logical function network element, a target analytics logical function network element, a model training logical function network element, and an NRF network element. The at least two of the source analytics logical function network element, the target analytics logical function network element, the model training logical function network element, and the NRF network element may be configured to perform the method in the method embodiment shown in FIG. 4A and FIG. 4B.

In addition, this application further provides a computer program. The computer program is used to implement operations and/or processing performed by a first model training logical function network element in the method provided in this application.

This application further provides a computer program. The computer program is used to implement operations and/or processing performed by a second model training logical function network element in the method provided in this application.

This application further provides a computer program. The computer program is used to implement operations and/or processing performed by an analytics logical function network element in the method provided in this application.

This application further provides a computer program. The computer program is used to implement operations and/or processing performed by an NRF network element in the method provided in this application.

This application further provides a computer program. The computer program is used to implement operations and/or processing performed by a source analytics logical function network element in the method provided in this application.

This application further provides a computer program. The computer program is used to implement operations and/or processing performed by a target analytics logical function network element in the method provided in this application.

This application further provides a computer program. The computer program is used to implement operations and/or processing performed by a model training logical function network element in the method provided in this application.

This application further provides a computer-readable storage medium. The computer-readable storage medium stores computer code. When the computer code is run on a computer, the computer is caused to perform operations and/or processing performed by a first model training logical function network element in the method provided in this application.

This application further provides a computer-readable storage medium. The computer-readable storage medium stores computer code. When the computer code is run on a computer, the computer is caused to perform operations and/or processing performed by a second model training logical function network element in the method provided in this application.

This application further provides a computer-readable storage medium. The computer-readable storage medium stores computer code. When the computer code is run on a computer, the computer is caused to perform operations and/or processing performed by an analytics logical function network element in the method provided in this application.

This application further provides a computer-readable storage medium. The computer-readable storage medium stores computer code. When the computer code is run on a computer, the computer is caused to perform operations and/or processing performed by an NRF network element in the method provided in this application.

This application further provides a computer-readable storage medium. The computer-readable storage medium stores computer code. When the computer code is run on a computer, the computer is caused to perform operations and/or processing performed by a source analytics logical function network element in the method provided in this application.

This application further provides a computer-readable storage medium. The computer-readable storage medium stores computer code. When the computer code is run on a computer, the computer is caused to perform operations and/or processing performed by a target analytics logical function network element in the method provided in this application.

This application further provides a computer-readable storage medium. The computer-readable storage medium stores computer code. When the computer code is run on a computer, the computer is caused to perform operations and/or processing performed by a model training logical function network element in the method provided in this application.

This application further provides a computer program product. The computer program product includes computer code or a computer program. When the computer code or the computer program is run on a computer, operations and/or processing performed by a first model training logical function network element in the method provided in this application are/is performed.

This application further provides a computer program product. The computer program product includes computer code or a computer program. When the computer code or the computer program is run on a computer, operations and/or processing performed by a second model training logical function network element in the method provided in this application are/is performed.

This application further provides a computer program product. The computer program product includes computer code or a computer program. When the computer code or the computer program is run on a computer, operations and/or processing performed by an analytics logical function network element in the method provided in this application are/is performed.

This application further provides a computer program product. The computer program product includes computer code or a computer program. When the computer code or the computer program is run on a computer, operations and/or processing performed by an NRF network element in the method provided in this application are/is performed.

This application further provides a computer program product. The computer program product includes computer code or a computer program. When the computer code or the computer program is run on a computer, operations and/or processing performed by a source analytics logical function network element in the method provided in this application are/is performed.

This application further provides a computer program product. The computer program product includes computer code or a computer program. When the computer code or the computer program is run on a computer, operations and/or processing performed by a target analytics logical function network element in the method provided in this application are/is performed.

This application further provides a computer program product. The computer program product includes computer code or a computer program. When the computer code or the computer program is run on a computer, operations and/or processing performed by a model training logical function network element in the method provided in this application are/is performed.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, the functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a readable storage medium and includes a plurality of instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model authorization method, comprising:
receiving, by a first model training logical function network element, a first model retrieval request from an analytics logical function network element, wherein the first model retrieval request comprises an analytics identifier, and the first model retrieval request is used to request information about a model corresponding to the analytics identifier;
sending, by the first model training logical function network element, a token get request to a network repository function NRF network element, wherein the token get request comprises the analytics identifier, an identifier of the analytics logical function network element, and an identifier of a second model training logical function network element, and the second model training logical function network element is used to provide the information about the model;
receiving, by the first model training logical function network element, a first token from the NRF network element, wherein the first token comprises the identifier of the analytics logical function network element and the identifier of the second model training logical function network element; and
sending, by the first model training logical function network element, a second model retrieval request to the second model training logical function network element, wherein the second model retrieval request comprises the analytics identifier, the identifier of the analytics logical function network element, and the first token, the second model retrieval request is used to obtain the information about the model for the analytics logical function network element, and the first token is used to verify the second model retrieval request.

2. The method according to claim 1, wherein the token get request further comprises one or more of the following: an identifier of the first model training logical function network element, a vendor identifier of the analytics logical function network element, or first indication information; and
the first indication information indicates that the first model training logical function network element requests the first token for the analytics logical function network element.

3. The method according to claim 1 or 2, wherein the first token further comprises one or more of the following: the analytics identifier, the identifier of the first model training logical function network element, the vendor identifier of the analytics logical function network element, or second indication information; and
the second indication information indicates that the analytics logical function network element is authorized to obtain the information about the model from the second model training logical function network element.

4. The method according to any one of claims 1 to 3, wherein the second model retrieval request further comprises one or more of the following: the identifier of the first model training logical function network element, an address of the analytics logical function network element, the vendor identifier of the analytics logical function network element, or third indication information; and
the third indication information indicates that the first model training logical function network element is to obtain the information about the model for the analytics logical function network element.

5. The method according to any one of claims 1 to 4, wherein before the sending, by the first model training logical function network element, the token get request to the network repository function NRF network element, the method further comprises:
sending, by the first model training logical function network element, a network element discovery request to the NRF network element, wherein the network element discovery request comprises the analytics identifier, the identifier of the analytics logical function network element, and/or the vendor identifier of the analytics logical function network element; and
receiving, by the first model training logical function network element, a network element discovery response from the NRF network element, wherein the network element discovery response comprises a candidate network element list, the network element list comprises the second model training logical function network element, and an interoperability indicator corresponding to the analytics identifier of the second model training logical function network element comprises the vendor identifier of the analytics logical function network element.

6. A model authorization method, comprising:
receiving, by a network repository function NRF network element, a token get request from a first model training logical function network element, wherein the token get request comprises an analytics identifier, an identifier of an analytics logical function network element, and an identifier of a second model training logical function network element, and the second model training logical function network element is used to provide information about a model corresponding to the analytics identifier;
verifying, by the NRF network element, whether a vendor identifier of the analytics logical function network element is comprised in an interoperability indicator corresponding to the analytics identifier of the second model training logical function network element; and
if the vendor identifier is comprised in the interoperability indicator, sending, by the NRF network element, a first token to the first model training logical function network element, wherein the first token comprises the identifier of the analytics logical function network element and the identifier of the second model training logical function network element.

7. The method according to claim 6, wherein before the verifying, by the NRF network element, whether the vendor identifier of the analytics logical function network element is comprised in the interoperability indicator of the second model training logical function network element, the method further comprises:
obtaining, by the NRF network element, the interoperability indicator corresponding to the analytics identifier of the second model training logical function network element from a network function NF profile corresponding to the identifier of the second model training logical function network element.

8. The method according to claim 6 or 7, wherein before the verifying, by the NRF network element, whether the vendor identifier of the analytics logical function network element is comprised in the interoperability indicator of the second model training logical function network element, the method further comprises:
obtaining, by the NRF network element, the vendor identifier of the analytics logical function network element from an NF profile corresponding to the identifier of the analytics logical function network element.

9. The method according to any one of claims 6 to 8, wherein the token get request further comprises one or more of the following: an identifier of the first model training logical function network element, the vendor identifier of the analytics logical function network element, or first indication information; and
the first indication information indicates that the first model training logical function network element requests the first token for the analytics logical function network element.

10. The method according to any one of claims 6 to 9, wherein the first token further comprises one or more of the following: the analytics identifier, the identifier of the first model training logical function network element, the vendor identifier of the analytics logical function network element, or second indication information; and
the second indication information indicates that the analytics logical function network element is authorized to obtain the information about the model from the second model training logical function network element.

11. The method according to any one of claims 6 to 10, wherein before the receiving, by the network repository function NRF network element, the token get request from the first model training logical function network element, the method further comprises:
receiving, by the NRF network element, a network element discovery request from the first model training logical function network element, wherein the network element discovery request comprises the analytics identifier, the identifier of the analytics logical function network element, and/or the vendor identifier of the analytics logical function network element;
obtaining, by the NRF network element, the vendor identifier of the analytics logical function network element based on the network element discovery request;
determining, by the NRF network element, a candidate network element list based on a stored NF profile of each network element, wherein the network element list comprises the second model training logical function network element, and the interoperability indicator corresponding to the analytics identifier of the second model training logical function network element comprises the vendor identifier of the analytics logical function network element; and
sending, by the NRF network element, a network element discovery response to the first model training logical function network element, wherein the network element discovery response comprises the candidate network element list.

12. The method according to claim 11, wherein the network element discovery request comprises the identifier of the analytics logical function network element; and
the obtaining, by the NRF network element, the vendor identifier of the analytics logical function network element based on the network element discovery request comprises:
obtaining, by the NRF network element, the vendor identifier of the analytics logical function network element from the NF profile corresponding to the identifier of the analytics logical function network element.

13. A model authorization method, comprising:
receiving, by a source analytics logical function network element, an analytics context transfer request from a target analytics logical function network element, wherein the analytics context transfer request comprises an identifier of an analytics context, and the analytics context transfer request is used to request to transfer information about a first model in the analytics context;
sending, by the source analytics logical function network element, a token get request to a network repository function NRF network element, wherein the token get request comprises an analytics identifier corresponding to the first model, an identifier of the target analytics logical function network element, and an identifier of a model training logical function network element, and the model training logical function network element is used to provide the information about the first model;
receiving, by the source analytics logical function network element, a first token from the NRF network element, wherein the first token comprises the identifier of the target analytics logical function network element and the identifier of the model training logical function network element; and
sending, by the source analytics logical function network element, a model retrieval request to the model training logical function network element, wherein the model retrieval request comprises the analytics identifier, the identifier of the target analytics logical function network element, and the first token, the model retrieval request is used to obtain the information about the first model for the target analytics logical function network element, and the first token is used to check the model retrieval request.

14. The method according to claim 13, wherein the analytics context transfer request further comprises one or both of the following: a second operation indicator of the target analytics logical function network element or a vendor identifier of the target analytics logical function network element; and the second operation indicator indicates a provider of a model that is available to the target analytics logical function network element.

15. The method according to claim 14, wherein before the sending, by the source analytics logical function network element, the token get request to the network repository function NRF network element, the method further comprises:
determining, by the source analytics logical function network element, whether a provider of the first model is located in the second operation indicator of the target analytics logical function network element.

16. The method according to claim 14, wherein before the sending, by the source analytics logical function network element, the token get request to the network repository function NRF network element, the method further comprises:
determining, by the source analytics logical function network element, that the vendor identifier of the target analytics logical function network element is comprised in an interoperability indicator of an information provider of the first model.

17. The method according to any one of claims 13 to 16, wherein before the receiving, by the source analytics logical function network element, the analytics context transfer request from the target analytics logical function network element, the method further comprises:
sending, by the source analytics logical function network element, a network element registration request to the NRF network element, wherein the network element registration request comprises a first operation indicator of the source analytics logical function network element, and the first operation indicator indicates a provider of a model that is available to the source analytics logical function network element.

18. The method according to any one of claims 13 to 17, wherein the token get request further comprises one or more of the following: an identifier of the source analytics logical function network element, the vendor identifier of the target analytics logical function network element, an identifier of the first model, or first indication information; and
the first indication information indicates that the source analytics logical function network element requests the first token for the target analytics logical function network element.

19. The method according to any one of claims 13 to 18, wherein the first token further comprises one or more of the following: the analytics identifier, the identifier of the source analytics logical function network element, the vendor identifier of the target analytics logical function network element, the identifier of the first model, or second indication information; and
the second indication information indicates that the target analytics logical function network element is authorized to obtain the information about the first model from the model training logical function network element.

20. The method according to any one of claims 13 to 19, wherein the model retrieval request further comprises one or more of the following: the identifier of the source analytics logical function network element, an address of the target analytics logical function network element, the identifier of the first model, the vendor identifier of the target analytics logical function network element, or third indication information; and
the third indication information indicates that the source analytics logical function network element is to obtain the information about the first model for the target analytics logical function network element.

21. A model authorization method, comprising:
receiving, by a network repository function NRF network element, a token get request from a source analytics logical function network element, wherein the token get request comprises an analytics identifier, an identifier of a target analytics logical function network element, and an identifier of a model training logical function network element, and the model training logical function network element is used to provide information about a first model corresponding to the analytics identifier;
verifying, by the NRF network element, whether a vendor identifier of the target analytics logical function network element is comprised in an interoperability indicator corresponding to the analytics identifier of the model training logical function network element; and
if the vendor identifier is comprised in the interoperability indicator, sending, by the NRF network element, a first token to the source analytics logical function network element, wherein the first token comprises the identifier of the target analytics logical function network element and the identifier of the model training logical function network element.

22. The method according to claim 21, wherein before the verifying, by the NRF network element, whether the vendor identifier of the target analytics logical function network element is comprised in the interoperability indicator of the model training logical function network element, the method further comprises:
obtaining, by the NRF network element, the interoperability indicator corresponding to the analytics identifier of the model training logical function network element from a network function NF profile corresponding to the identifier of the model training logical function network element.

23. The method according to claim 21 or 22, wherein before the verifying, by the NRF network element, whether the vendor identifier of the target analytics logical function network element is comprised in the interoperability indicator of the model training logical function network element, the method further comprises:
obtaining, by the NRF network element, the vendor identifier of the target analytics logical function network element from an NF profile corresponding to the identifier of the target analytics logical function network element.

24. The method according to any one of claims 21 to 23, wherein the token get request further comprises one or more of the following: an identifier of the source analytics logical function network element, the vendor identifier of the target analytics logical function network element, an identifier of the first model, or first indication information; and
the first indication information indicates that the source analytics logical function network element requests the first token for the target analytics logical function network element.

25. The method according to any one of claims 21 to 24, wherein the first token further comprises one or more of the following: the analytics identifier, the identifier of the source analytics logical function network element, the vendor identifier of the target analytics logical function network element, the identifier of the first model, or second indication information; and
the second indication information indicates that the target analytics logical function network element is authorized to obtain the information about the first model from the model training logical function network element.

26. The method according to any one of claims 21 to 25, wherein before the receiving, by the network repository function NRF network element, the token get request from the source analytics logical function network element, the method further comprises:
receiving, by the NRF network element, a first network element registration request from the source analytics logical function network element, wherein the first network element registration request comprises a first operation indicator of the source analytics logical function network element, and the first operation indicator indicates a provider of a model that is available to the source analytics logical function network element.

27. The method according to any one of claims 21 to 26, wherein before the receiving, by the network repository function NRF network element, the token get request from the source analytics logical function network element, the method further comprises:
receiving, by the NRF network element, a second network element registration request from the target analytics logical function network element, wherein the second network element registration request comprises a second operation indicator of the target analytics logical function network element, and the second operation indicator indicates a provider of a model that is available to the target analytics logical function network element.

28. A communication apparatus, comprising a unit or a module configured to perform the method according to any one of claims 1 to 27.

29. A readable storage medium, wherein the readable storage medium stores program instructions, and when the program instructions are run on a communication apparatus, the communication apparatus is caused to perform the method according to any one of claims 1 to 27.

30. A communication system, comprising a first model training logical function network element configured to perform the method according to any one of claims 1 to 5 and an NRF network element configured to perform the method according to any one of claims 6 to 12; or the communication system comprises a source analytics logical function network element configured to perform the method according to any one of claims 13 to 20 and an NRF network element configured to perform the method according to any one of claims 21 to 27.

31. A computer product, comprising instructions, wherein when the instructions are run, the method according to any one of claims 1 to 27 is performed.

32. A communication apparatus, comprising a processor, wherein the processor is configured to read and execute a program stored in a memory, to perform the method according to any one of claims 1 to 27.
